# EUROPÄISCHE PATENTANMELDUNG

(11) **EP 2 535 658 A1**
(43) Veröffentlichungstag der Anmeldung: **19.12.2012**
(21) Anmeldenummer: 11178271.0
(22) Anmeldetag: 22.08.2011
(51) Int. Cl.: F24F 13/02, F16L 9/00, F16L 25/00

(54) **Kopplungselement und Fluidleitungssystem**

(30) Priorität: 14.06.2011 EP 11169794
(71) Anmelder: Centrotherm Systemtechnik GmbH, 59929 Brilon (DE)
(72) Erfinder: Liese, Ralf, 59909 Bestwig (DE)
(74) Vertreter: Zachcial, Andreas

(57) **Zusammenfassung**

Bei einem Kopplungselement (3a, 3b, 3c) zur fluiddichten Verbindung von ablängbaren, modularen Fluidleitungsbauteilen (2, 2', 2"), das zumindest einen ersten Kopplungskörper (21) mit einer Durchtrittsöffnung (22) umfasst, soll eine Lösung geschaffen werden, die auf konstruktiv einfache Weise und kostengünstig ein Kopplungselement bereitstellt, welches eine einfache Montage bei gleichzeitiger Gewährleistung einer sicheren und fluiddichten Verbindung von Leitungsbauteilen ermöglicht. Dies wird dadurch erreicht, dass der erste Kopplungskörper (21) einen Außenumfangssteg (23) und einen die Durchtrittsöffnung (22) begrenzenden Innenumfangssteg (24) aufweist, wobei wenigstens ein Begrenzungsabschnitt (25) des ersten Kopplungskörpers (21) den Außenumfangssteg (23) mit dem Innenumfangssteg (24) verbindet, wobei der Innenumfangssteg (24), der Außenumfangssteg (23) und der Begrenzungsabschnitt (25) eine Umfangsrinne (26) des ersten Kopplungskörpers (21) bilden, wobei ein zweiter Kopplungskörper (27) vorgesehen ist, der eine Durchgangsöffnung (28) und einen Außenumfangsansatz (30) aufweist, und wobei der Außenumfangsansatz (30) und ein Innenumfangsansatz (29) über eine Begrenzungswandung (31) des zweiten Kopplungskörpers (21) miteinander verbunden sind.

## Beschreibung

Die Erfindung richtet sich auf ein Kopplungselement zur fluiddichten Verbindung von ablängbaren, modularen Fluidleitungsbauteilen, das zumindest einen ersten Kopplungskörper mit einer Durchtrittsöffnung umfasst.

Ferner richtet sich die Erfindung auf ein
Fluidleitungssystem mit wenigstens zwei ablängbaren, modularen Fluidleitungsbauteilen und mit zumindest einem die wenigstens zwei Fluidleitungsbauteile fluiddicht und lösbar miteinander verbindenden Kopplungselement, das einen ersten Kopplungskörper umfasst, der eine Durchtrittsöffnung aufweist, wobei ein jeweiliges Fluidleitungsbauteil mehrere plattenförmig und formstabil ausgebildete Wandsegmente aufweist, wobei benachbarte Wandsegmente über wenigstens ein Eckenelement verbunden sind.

Ein Kopplungselement der eingangs bezeichneten Art ist vielfach aus dem Stand der Technik bekannt und kann in einfachster Ausgestaltung beispielsweise in Form einer Rohrschelle ausgeführt sein. Ferner kann ein modulares Fluidleitungsbauteil beispielsweise als Fluidleitungskanal in Leitungssystemen eingesetzt werden und ist zum Beispiel in der DE 100 17 567 A1 beschrieben. Dieses modulare Fluidleitungsbauteil umfasst eine Anzahl von plattenförmig ausgebildeten Wandsegmenten, die an ihren parallel zueinander verlaufenden Längskanten mit einem Verbindungsmittel bzw. einem Eckenelement verbunden sind. Als Verbindungsmittel sind Schraubverbindungen vorgesehen, die die aus einem metallischen Material bestehenden Wandsegmente entlang der Längskanten von benachbarten Wandsegmenten lösbar miteinander verbinden. Dieses modulare Fluidleitungsbauteil weist zwar eine gewisse Flexibilität hinsichtlich des Austauschs von Wandsegmenten auf und ist auch für einen platzsparenden Transport geeignet. Nachteilig ist jedoch, dass die Montage bzw. der Zusammenbau des Fluidleitungsbauteils sehr zeitintensiv ist und ferner aufgrund der vorhandenen Schraubverbindungen zusätzliche Dichtmittel an den Verbindungsstellen im Bereich der Längskanten der verbundenen Wandsegmente angebracht werden müssen, was neben erhöhter Bauteilkosten auch die Montagezeit erhöht.

Es sind auch andere metallische Fluidleitungsbauteile bekannt, die bereits mit einem polygonalen und nicht veränderbaren Querschnitt hergestellt und geliefert werden. Solche Fluidleitungsbauteile weisen jedoch den Nachteil auf, dass sie ein großes Volumen bei ihrer Lagerung und beim Transport an ihren Bestimmungsort einnehmen. Darüber hinaus ist die Länge eines solchen Fluidleitungsbauteils nachträglich nicht mehr oder nur in Verbindung mit einem enormen Aufwand abänderbar. Auch ist hinsichtlich der Abdichtung der Verbindung von Fluidleitungsbauteilen ein nicht vernachlässigbarer Aufwand zu betreiben.

Bekannt sind ferner nicht-metallische Fluidleitungsbauteile, die sich im Allgemeinen durch eine plattenähnliche Bauweise auszeichnen, die am Bestimmungs- bzw. Verbauungsort aus vorgefertigten Elementen zusammengesteckt oder gefügt werden, wobei je nach Dichtigkeitsanforderung an das Fluidleitungsbauteil die Fügestellen mit Silikon oder einem dafür vorgesehenen zusätzlichen Bauteil abgedichtet werden müssen. Ein solches Fluidleitungsbauteil ist beispielsweise aus der DE 100 39 859 A1 bekannt, wobei es eine wärmeisolierende, feuerbeständige und schallisolierende Wandung aus verdichteter Steinwolle oder Mineralwolle aufweist. In das Wandungsmaterial des plattenförmig ausgebildeten Fluidleitungsbauteils sind zur Ausbildung einer polygonalen Querschnittsform V-förmige Einschnitte vorgesehen. Jedoch stellen die Einschnitte eine Schwächung der Wandung dar und bergen die Gefahr der Bildung von Kältebrücken. Ferner sind die V-förmigen Einschnitte nur nach Demontage des Fluidleitungsbauteils zu reinigen, denn erst dann ist es möglich, etwaige Ablagerungen aus den V-förmigen Einschnitten zu entfernen. Darüber hinaus ist die Verbindung von angrenzenden Fluidleitungsbauteilen aus Steinwolle oder Mineralwolle aufwendig, da die Übergangsbereiche beispielsweise mit Silikon abzudichten sind.

Der Erfindung liegt daher die Aufgabe zugrunde eine Lösung zu schaffen, die auf konstruktiv einfache Weise und kostengünstig ein Fluidleitungssystem mit einem Kopplungselement bereitstellt, welches eine einfache Montage bei gleichzeitiger Gewährleistung einer sicheren und fluiddichten Verbindung von Fluidleitungsbauteilen ermöglicht. Gleichzeitig soll das Fluidleitungsbauteil für seinen Transport zum Bestimmungsort eine platzsparende und ein geringes Volumen einnehmende Position einnehmen können.

Bei einem Kopplungselement der eingangs bezeichneten Art wird die Aufgabe erfindungsgemäß dadurch gelöst, dass der erste Kopplungskörper einen sich in Axialrichtung erstreckenden Außenumfangssteg und einen die Durchtrittsöffnung begrenzenden sowie sich in Axialrichtung parallel zu dem Außenumfangssteg erstreckenden Innenumfangssteg aufweist, der innenliegend in Bezug auf den Außenumfangssteg angeordnet ist und von diesem umfangsmäßig umgeben ist, wobei wenigstens ein sich senkrecht zur Axialrichtung erstreckender Begrenzungsabschnitt des ersten Kopplungskörpers den Außenumfangssteg mit dem Innenumfangssteg verbindet, wobei der Innenumfangssteg, der Außenumfangssteg und der Begrenzungsabschnitt eine in Axialrichtung einseitig offene und um die Durchtrittsöffnung herum verlaufende Umfangsrinne des ersten Kopplungskörpers bilden, wobei ein zweiter Kopplungskörper vorgesehen ist, der fluiddicht mit dem ersten Kopplungskörper verbunden ist oder der einstückig mit dem ersten Kopplungskörper ausgebildet ist, wobei der zweite Kopplungskörper eine Durchgangsöffnung, die von einem sich vom zweiten Kopplungskörper aus in Axialrichtung erstreckenden Innenumfangsansatz begrenzt ist, und einen sich von dem zweiten Kopplungskörper aus in Axialrichtung erstreckenden und den Innenumfangsansatz umfangsmäßig umgebenden Außenumfangsansatz aufweist, und wobei der Außenumfangsansatz und der Innenumfangsansatz über eine Begrenzungswandung des zweiten Kopplungskörpers miteinander verbunden sind.

Ferner wird bei einem Fluidleitungssystem der eingangs bezeichneten Art die vorstehende Aufgabe dadurch gelöst, dass der erste Kopplungskörper einen sich in Axialrichtung erstreckenden Außenumfangssteg und einen die Durchtrittsöffnung begrenzenden sowie sich in Axialrichtung parallel zu dem Außenumfangssteg erstreckenden Innenumfangssteg aufweist, der in Bezug auf den Außenumfangssteg innenliegend angeordnet ist und von diesem umfangsmäßig umgeben ist, wobei wenigstens ein sich senkrecht zur Axialrichtung erstreckender Begrenzungsabschnitt des Kopplungskörpers den Außenumfangssteg mit dem Innenumfangssteg verbindet, wobei der Innenumfangssteg, der Außenumfangssteg und der Begrenzungsabschnitt eine in Axialrichtung einseitig offene und um die Durchtrittsöffnung herum verlaufende Umfangsrinne des ersten Kopplungskörpers bilden, die ein Stirnende eines Fluidleitungsbauteils in klemmender, rastender, spannender oder verschraubbarer bzw. schraubbarer Weise aufnimmt, wobei ein zweiter Kopplungskörper vorgesehen ist, der fluiddicht mit dem ersten Kopplungskörper verbunden ist oder der einstückig mit dem ersten Kopplungskörper ausgebildet ist und zur Verbindung mit einem anderen Fluidleitungsbauteil bestimmt ist, wobei der zweite Kopplungskörper eine Durchgangsöffnung, die von einem sich vom zweiten Kopplungskörper aus in Axialrichtung erstreckenden Innenumfangsansatz begrenzt ist, und einen sich von dem zweiten Kopplungskörper aus in Axialrichtung erstreckenden und den Innenumfangsansatz umfangsmäßig umgebenden Außenumfangsansatz aufweist, und wobei der Außenumfangsansatz und der Innenumfangsansatz über eine Begrenzungswandung des zweiten Kopplungskörpers miteinander verbunden sind.

Vorteilhafte und zweckmäßige Ausgestaltungen und Weiterbildungen der Erfindung ergeben sich aus den Unteransprüchen.
Durch die Erfindung werden ein Fluidleitungssystem und ein Kopplungselement zur Verfügung gestellt, welche sich durch eine funktionsgerechte Konstruktion auszeichnen und einen einfachen und kostengünstigen Aufbau eines Leitungssystems nach dem Baukastenprinzip ermöglichen. Dabei kann das Fluidleitungsbauteil je nach Anzahl der Wandsegmente jeden erdenklichen polygonalen oder auch elliptischen Querschnitt aufweisen, wobei das Kopplungselement mit einem dem Fluidleitungsbauteil angepassten Querschnitt eine fluiddichte Verbindung der Fluidleitungsbauteile sicherstellt, ohne dass dazu aufwendige Abdichtmaßnahmen getroffen werden müssten. Zu verbindende Fluidleitungsbauteile werden im Wesentlichen mit ihren Stirnenden in die Umfangsrinne des Kopplungselementes eingeschoben bzw. eingesteckt, wobei die konstruktive Ausgestaltung des Kopplungselementes die gewünschte Abdichtfunktion aufweist. Insbesondere bei einem Fluidleitungsbauteil, welches für seinen Transport flachlegbar ist und aus einem Fasermaterial gebildet ist, kann das Kopplungselement eine Art Schnittkantenschutz darstellen, da beim individuellen Ablängen eines Fluidleitungsbauteils immer das Wandmaterial offenliegt und vor Schmutz und Wasser geschützt werden muss. Das offenliegende Wandmaterial ist unerwünscht und muss verdeckt und abgedichtet werden, was durch das erfindungsgemäße Kopplungselement auf einfache Weise ermöglicht wird. Das Kopplungselement trägt ferner zur Erhöhung der Stabilität des in Gebrauchsposition errichteten Fluidleitungsbauteils bei. Das Fluidleitungsbauteil in Kombination mit dem Kopplungselement stellt eine komplett modulare Bauweise für Fluidleitungssysteme dar, wodurch die Funktionsweise der Wandsegmente und der Eckenelemente mit scharnierartig ausgebildeten Gelenkelementen mechanisch und funktional komplett entkoppelt ist. Darüber hinaus definieren die Eckenelemente eine genau festgelegte und gut zu reinigende Innenkehle des Fluidleitungsbauteils.

In Ausgestaltung des erfindungsgemäßen Fluidleitungssystems ist für das Fluidleitungsbauteil vorgesehen, dass ein jeweiliges Eckenelement sich im Wesentlichen in Längsrichtung des Fluidleitungsbauteils erstreckt und wenigstens ein benachbarte Wandsegmente miteinander verbindendes scharnierartiges Gelenkelement umfasst, durch das die Wandsegmente aus der Gebrauchsposition in eine Transportposition, in welcher die Wandsegmente zusammengeklappt und im Wesentlichen aufeinanderliegend angeordnet sind, schwenkbar sind. Dadurch ist ein modulares Fluidleitungsbauteil bereitgestellt, welches sich durch eine funktionsgerechte Konstruktion auszeichnet und aufgrund seines modularen Aufbaus ein minimales Transportvolumen benötigt. Der modulare Aufbau nach dem Baukastenprinzip ermöglicht, dass das Fluidleitungsbauteil je nach Anzahl der Wandsegmente jeden erdenklichen Querschnitt aufweisen kann. Dabei ist durch das zwischen benachbarten Wandsegmenten an deren Längskanten vorgesehene scharnierartig ausgebildete Gelenkelement gewährleistet, dass die Wandsegmente aus der Gebrauchsstellung in eine Transportstellung schwenkbar sind, so dass die einzelnen Wandsegmente quer zur Längsrichtung des Fluidleitungsbauteils klappbar sind und somit das Fluidleitungsbauteil insgesamt flachlegbar und platzsparend transportierbar ist. Das scharnierartig ausgebildete Gelenkelement, welches beispielsweise als formstabiles Scharnier ausgebildet und/oder ein Filmscharnier sein kann, stellt eine dünnwandige Verbindung dar und besteht beispielsweise aus Polypropylen. Dieses Material für das Gelenkelement weist eine ausgezeichnete Verschleißbeständigkeit auf. Die Gelenkelemente üben keine Dehnung auf andere Komponenten des Fluidleitungsbauteils aus, wodurch das Materialspektrum für die Wandsegmente ausgeweitet wird. Vom flachgelegten Transportzustand zum aufgestellten Kanal in Gebrauchsposition werden die Wandsegmente einfach aufgerichtet und entsprechend zueinander ausgerichtet. In der Gebrauchsposition können die Wandsegmente dann mittels einer Rast- oder Arretierungsfunktion, die Teil eines jeweiligen Eckenelements sein kann, oder mittels zusätzlich anzubringender Keilleisten fixiert werden. Die Verbindung zweier Eckenelemente kann mit Hilfe bekannter Verbindungsmöglichkeiten, wie zum Beispiel Verschraubungen, Spannsystemen oder dergleichen, erfolgen. Die Eckenelemente sind so ausgelegt und ausgebildet, dass ein Flachlegen des Fluidleitungsbauteils ohne Materialschädigung oder ohne Abnahme der Materialeigenschaften der Wandsegmente gewährleistet ist. Das erfindungsgemäße Fluidleitungsbauteil stellt eine komplett modulare Bauweise für Fluidleitungssysteme dar, wodurch die Funktionsweise der Wandsegmente und der Eckenelemente mit scharnierartig ausgebildeten Gelenkelementen mechanisch und funktional komplett entkoppelt ist. Darüber hinaus definieren die Eckenelemente eine genau festgelegte und gut zu reinigende Innenkehle des Fluidleitungsbauteils.

In Weiterbildung sieht die Erfindung für das Fluidleitungsbauteil vor, dass ein jeweiliges Eckenelement zweischenklig ausgebildet ist, wobei ein erster Schenkel im Bereich eines Längsendes eines Wandsegments angebracht ist und ein zweiter Schenkel im Bereich eines Längsendes eines benachbarten Wandsegments angebracht ist, wobei das scharnierartige Gelenkelement den ersten Schenkel mit dem zweiten Schenkel schwenkbeweglich verbindet. Auf diese Weise ist eine sichere Verbindung des scharnierartig ausgebildeten Gelenkelements mit den Wandsegmenten und somit die Klappbarkeit der Wandsegmente sichergestellt.

Um zumindest die Längskanten der Wandsegmente gegenüber Beschädigung zu schützen, ist in Ausgestaltung der Erfindung für das Fluidleitungsbauteil vorgesehen, dass der erste Schenkel und/oder der zweite Schenkel als Profilelement ausgebildet sind/ist, der das entsprechende Wandsegment im Bereich des entsprechenden Längsendes abschnittsweise umfasst und ummantelt. Das Profilelement kann beispielsweise im Querschnitt U-förmig ausgebildet sein und eine Art Schnittkantenschutz bieten, wobei die beiden Schenkel des U-förmigen Profilelements entweder gleich lang oder unterschiedlich lang ausgebildet sein können.

Damit nach Einbau des modularen Fluidleitungsbauteils die Querschnittsform gesichert ist und beibehalten wird, sieht die Erfindung in weiterer Ausgestaltung des Fluidleitungsbauteils vor, dass der erste Schenkel und/oder der zweite Schenkel wenigstens ein Einrastmittel aufweist, das in Gebrauchsposition des Fluidleitungsbauteils mit zumindest einem an dem zweiten Schenkel und/oder dem ersten Schenkel ausgebildeten Rückhalteelement in Eingriff bringbar ist. Somit weist entweder einer der beiden Schenkel oder beide Schenkel ein Einrastmittel auf, das mit einem auf dem anderen Schenkel ausgebildeten Rückhalteelement verrastbar ist und in Eingriff gebracht werden kann, so dass die benachbarten Wandsegmente in Position gehalten werden. Dabei kann das Einrastmittel zusammen mit dem Rückhalteelement auch die Funktion einer Arretierung bieten, durch die benachbarte Wandelemente zueinander in Position gehalten werden. Denkbar ist es auch, dass die Arretierung benachbarter Wandelemente durch bekannte Techniken, wie zum Beispiel eine Winkelverbindung, erfolgt.

Um die benachbarten Wandsegmente sicher aus der Transportposition in die Gebrauchsposition zu überführen, ist es von besonderem Vorteil, wenn der erste Schenkel und/oder der zweite Schenkel wenigstens einen die Bewegung der Wandsegmente aus der Transportposition in die Gebrauchsposition führenden Führungssteg aufweist, der in Gebrauchsposition des Fluidleitungsbauteils in zumindest einer an dem zweiten Schenkel und/oder dem ersten Schenkel ausgebildeten Führungsausnehmung angeordnet ist.

Ein bei der überwiegenden Anzahl von Fluidleitungsbauteilen auftretendes Problem ist das der unerwünschten Kältebrücken in den Eckenbereichen, wozu bei solchen Fluidleitungsbauteilen zusätzliche und wärmeisolierende Bauteile in den Eckbereichen vorgesehen sind. Hinsichtlich dieses Aspekts sieht die Erfindung in weiterer Ausgestaltung des Fluidleitungsbauteils vor, dass vier Wandsegmente einen viereckigen Querschnitt des Fluidleitungsbauteils bilden, wobei in Gebrauchsposition wenigstens ein jeweiliges Längsende von zwei parallel zueinander verlaufenden Wandsegmenten an einer jeweiligen Innenseitenfläche der zwei anderen parallel zueinander verlaufenden Wandsegmente anliegt. Dadurch, dass wenigstens zwei Längsenden von Wandsegmenten an Innenseitenflächen von entsprechend benachbarten Wandsegmenten anliegen, wird zumindest in zwei Eckenbereichen kein zusätzliches Bauteil benötigt, um eine Kältebrücke in diesen Eckenbereichen zu beseitigt.

Besonders von Vorteil ist es, wenn beide Längskanten bzw.

Längsenden von zwei parallel zueinander verlaufenden Wandsegmenten an entsprechenden Innenseitenflächen benachbarter Wandsegmente anliegen. Bei dieser Ausgestaltung wird gar kein zusätzliches Bauteil benötigt, welches eine Kältebrücke im Eckenbereich beseitigt.

Auch bei einer alternativen Ausgestaltung für das Fluidleitungsbauteil, bei der gemäß der Erfindung vorgesehen ist, dass von jedem Wandsegment eine Längskante bzw. ein Längsende an einer Innenseitenfläche eines benachbarten Wandsegments anliegt, ist kein zusätzliches Bauteil zur Beseitigung einer Kältebrücke notwendig.

Die Erfindung sieht bei einer weiteren alternativen Ausführungsform für das Fluidleitungsbauteil vor, dass vier Wandsegmente einen viereckigen Querschnitt des Fluidleitungsbauteils bilden, wobei zumindest in Gebrauchsposition die Wandsegmente mit ihren Innenseitenflächen an ihren Längskanten bzw. Längsenden aneinander anliegen. Diese Art der Verbindung benachbarter Wandsegmente hat den Vorteil eines sehr platzsparenden Zusammenlegens des Fluidleitungsbauteils. Allerdings weisen hierbei die Eckenbereiche eine dünne Wandstärke auf, so dass Maßnahmen zur Beseitigung von Kältebrücken vorzusehen sind.

Um die Steifigkeit des Fluidleitungsbauteils in Längsrichtung zu erhöhen, sieht die Erfindung bei dieser alternativen Ausführungsform für das Fluidleitungsbauteil vor, dass ein jeweiliges Eckenelement ferner ein sich in Längsrichtung des Fluidleitungsbauteils erstreckendes und stabförmig ausgebildetes Arretierungselement aufweist, welches in Transportposition des Fluidleitungsbauteils auf der Außenseitenfläche eines entsprechenden Wandsegments angeordnet ist und welches in Gebrauchsposition des Fluidleitungsbauteils zwischen den Längsenden von benachbarten Wandsegmenten angeordnet ist und die Wandsegmente keilartig in Position hält.

Um dem bei dieser alternativen Ausführungsform vorherrschenden Problem der Kältebrücke entgegenzuwirken, ist in Weiterbildung der Erfindung vorgesehen, dass das Arretierungselement aus einem wärmeisolierenden Material gebildet ist. Alternativ zu letztgenannter Maßnahme kann das Arretierungselement hohlförmig ausgebildet sein. Optional kann der Hohlraum des Arretierungselements dann mit einem wärmeisolierenden Material ausgefüllt bzw. ausfüllbar sein.

In weiterer Ausgestaltung ist vorgesehen, dass die Wandsegmente zumindest auf ihren Innenseitenflächen mit einer fluidundurchlässigen Schicht bzw. Beschichtung versehen sind. Die Schicht kann zum Zwecke einer Dampfsperre beispielsweise eine Kunststoffschicht sein. Für die fluidtransportierenden Innenseitenflächen kann ferner beispielsweise eine Folienschicht aus Polyethylenterephthalat (PET) verwendet werden.

Besonders modular bei dem Fluidleitungsbauteil ist die Möglichkeit, entsprechend der gewünschten Anwendung die Materialien der Wandsegmente auswählen zu können. Daher sieht die Erfindung in Ausgestaltung vor, dass die Wandsegmente aus einem verdichteten, wärmeisolierenden sowie feuerbeständigen Fasermaterial, Verbundwerkstoff oder Hartschaum gebildet sind. Allgemein sind somit Ausführungen mit nicht brennbaren Materialien, wie alu-kaschierter Steinwolle, denkbar falls eine Feuerwiderstandsfähigkeit erreicht werden soll. Es können Hartschaumplatten oder auch Glaswollplatten mit verschiedenen Kaschierungen, aber auch alle weiteren denkbaren wärmeisolierenden Materialen, zum Einsatz kommen. Dabei kann die Wärmeisolierung durch das Material der Wandsegmente gegeben sein, wohingegen die Wasserdichtheit aus dem aufkaschierten Material stammen kann.

Besonders von Vorteil bei dem erfindungsgemäßen Fluidleitungssystem ist es, wenn das Kopplungselement Rastmittel aufweist, die mit an dem Fluidleitungsbauteil ausgebildeten Rastaufnahmemittel in Eingriff bringbar sind. Dies erhöht die Verbindungssicherheit zwischen zu verbindenden Fluidleitungsbauteilen, wobei die Rastmittel als Rastnasen ausgebildet sein können, die in als Rastvertiefungen oder Rasteinkerbungen ausgebildete Rastaufnahmemittel eingreifen, wenn das Stirnende eines Fluidleitungsbauteils beispielsweise in die Umfangsrinne des Kopplungselements eingeschoben bzw. eingesetzt ist. Zu diesem Zweck können alle denkbaren Verbindungsmöglichkeiten zum Einsatz kommen, wie zum Beispiel Verschraubungen, Spannsysteme oder dergleichen.

In Ausgestaltung des erfindungsgemäßen Kopplungselementes und/oder des erfindungsgemäßen Fluidleitungssystems ist vorgesehen, dass der Innenumfangsansatz, der Außenumfangsansatz und die Begrenzungswandung einen in Axialrichtung einseitig offenen und um die Durchgangsöffnung herum verlaufenden Umfangskanal bilden, der in entgegengesetzter Axialrichtung in Bezug auf die Umfangsrinne des ersten Kopplungskörpers einseitig offen ist. Dementsprechend können beispielsweise Fluidleitungsbauteile mit gleichem Querschnitt mit ihren jeweiligen Stirnenden in die Umfangsrinne und in den Umfangskanal des Kopplungselementes eingeschoben werden, um die fluiddichte Verbindung zu realisieren. Hierbei würde dann die Durchtrittsöffnung des ersten Kopplungskörpers zu der Durchgangsöffnung des zweiten Kopplungskörpers identisch dimensioniert sein, wobei der Innenumfangssteg zu dem Innenumfangsansatz und der Außenumfangssteg zu dem Außenumfangsansatz im Wesentlichen fluchtend angeordnet und ausgebildet sein kann.

Um auch den Fall einer Strömungserweiterung bzw. Strömungsreduzierung zu berücksichtigen, ist in Ausgestaltung der Erfindung für das Fluidleitungssystem und/oder für das Kopplungselement vorgesehen, dass der erste Kopplungskörper im Querschnitt größer dimensioniert ist als der zweite Kopplungskörper. Dies impliziert, dass auch die Durchtrittsöffnung des ersten Kopplungskörpers größer ausgeführt ist als die Durchgangsöffnung des zweiten Kopplungskörpers, so dass von dem Kopplungselement eine Veränderung des Durchströmungsquerschnitts realisiert wird.

Für den Fall der Strömungserweiterung bzw.

Strömungsreduzierung sieht die Erfindung in weiterer Ausgestaltung des Fluidleitungssystems und/oder des Kopplungselementes vor, dass der Innenumfangssteg des ersten Kopplungskörpers und der Außenumfangsansatz des zweiten Kopplungskörpers in Axialrichtung überdeckend und senkrecht zur Axialrichtung übereinander liegend angeordnet sind. Auf diese Weise sind konstruktiv einfache Maßnahmen zur Abdichtung der Verbindung möglich.

Um Strömungsverluste, die infolge einer sprunghaften Änderung des Durchströmungsquerschnitts auftreten könnten, zu vermeiden, ist in Weiterbildung der Erfindung vorgesehen, dass das Kopplungselement ein einen kontinuierlichen

Strömungsübergang zwischen der Durchtrittsöffnung des ersten Kopplungskörpers und der Durchgangsöffnung des zweiten Kopplungskörpers ermöglichendes Schenkelelement aufweist, das sich zwischen dem Innenumfangssteg des ersten Kopplungskörpers und dem Innenumfangsansatz des zweiten Kopplungskörpers erstreckt und eine Höhe aufweist, die im Wesentlichen der Länge der Begrenzungswandung des zweiten Kopplungskörpers entspricht.

Neben der Ausbildung und Verwendung des Kopplungselements als Verbindungs- und Reduzierstück kann das Kopplungselement auch als Sattelstück ausgestaltet sein, um senkrecht bzw. quer zueinander verlaufende Fluidleitungsbauteile zu verbinden. Zu diesem Zweck sieht die Erfindung in Weiterbildung des Fluidleitungssystems und/oder des Kopplungselementes vor, dass der Begrenzungsabschnitt des ersten Kopplungskörpers einen Klemmsteg aufweist, der sich von der der Umfangsrinne gegenüberliegenden Seite des Begrenzungsabschnitts aus in Axialrichtung erstreckt, wobei der Klemmsteg des ersten Kopplungskörpers zwischen dem Innenumfangsansatz und dem Außenumfangsansatz des zweiten Kopplungskörpers zur lösbaren Verbindung des ersten Kopplungskörpers mit dem zweiten Kopplungskörper in klemmender, rastender, spannender (z.B. Spannsysteme) oder verschraubbarer bzw. schraubbarer Weise einbringbar ist. Dementsprechend ist in Ausgestaltung des erfindungsgemäßen Fluidleitungssystems vorgesehen, dass das Kopplungselement in einer Öffnung eines Wandsegments eines ersten Fluidleitungsbauteils passgenau eingebaut ist und mit einem senkrecht zu dem ersten Fluidleitungsbauteil angeordneten zweiten Fluidleitungsbauteil nach Art eines Sattelstücks verbunden ist.

Eine konstruktiv besonders einfache Möglichkeit zur Abdichtung der aus Fluidleitungsbauteilen und Kopplungselement bestehenden Verbindung besteht darin, dass zumindest ein elastisches Dichtungselement vorgesehen ist, das über das freie Ende des Innenumfangsstegs und/oder über das freie Ende des Innenumfangsansatzes geschoben ist. Bei dieser Ausgestaltung drückt das in die Umfangsrinne bzw. in den Umfangskanal eingeschobene Stirnende eines Fluidleitungsbauteils auf das Dichtelement und komprimiert es. Des Weiteren kann wenigstens ein Dichtungselement an mindestens einer sich dafür eignenden Position in jeder erdenklichen Geometrie und Materialkomposition angebracht werden.

Um die Komprimierung des Dichtelements oder die Verklemmung des Stirnendes eines Fluidleitungsbauteils in der Umfangsrinne bzw. in dem Umfangskanal zu erhöhen, ist schließlich in Weiterbildung der Erfindung vorgesehen, dass ein jeweiliges Stirnende eines jeweiligen Wandsegments mit einem das Stirnende umhüllenden Kantenschutz versehen ist, der in klemmender Weise in die Umfangsrinne oder den Umfangskanal des Kopplungselements einbringbar ist. Dadurch ist auch ein Schutz der Kante des Stirnendes des Fluidleitungsbauteils mit umfasst. Alternativ zu der klemmenden Einbringung kann der Kantenschutz auch zum Beispiel aufgeschraubt oder auf das Stirnende mittels Spannmitteln aufgesetzt werden. Zusätzlich kann der Kantenschutz mit einer dichtenden Masse (z.B. Montagekleber, Silikon oder dergleichen) versehen werden, welche bewirkt, dass das Wandsegment im stirnseitigen Bereich fluiddicht wird.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhaft bevorzugte Ausführungsbeispiele der Erfindung dargestellt sind. In der Zeichnung zeigt:
Figur 1 ein erfindungsgemäßes Fluidleitungssystem in perspektivischer Ansicht,
Figur 2 ein in Gebrauchsposition angeordnetes Fluidleitungsbauteil gemäß einer ersten Ausführungsform in Schnittansicht,
Figur 3 das Fluidleitungsbauteil aus Figur 2 in einer Position zwischen der Gebrauchs- und Transportposition,
Figur 4 ein in Gebrauchsposition angeordnetes Fluidleitungsbauteil gemäß einer zweiten Ausführungsform in Schnittansicht,
Figur 5 das Fluidleitungsbauteil aus Figur 4 in einer Position zwischen der Gebrauchs- und Transportposition,
Figur 6 ein in Gebrauchsposition angeordnetes Fluidleitungsbauteil gemäß einer dritten Ausführungsform in Schnittansicht,
Figur 7 das Fluidleitungsbauteil aus Figur 6 in einer Position zwischen der Gebrauchs- und Transportposition,
Figur 8 einen Kantenschutz für ein Stirnende eines Wandsegments des Fluidleitungsbauteils,
Figur 9 den an einem Wandsegment angebrachten Kantenschutz aus Figur 8,
Figur 10 das Stirnende eines Fluidleitungsbauteils mit Kantenschutz,
Figur 11 ein Kopplungselement nach Art eines Verbindungsstücks in perspektivischer Ansicht,
Figur 12 das Kopplungselement aus Figur 11 in perspektivischer Schnittansicht,
Figur 13 eine vergrößerte Darstellung des Kopplungselements aus Figur 12 mit angebrachten Wandsegmenten,
Figur 14 ein erster Kopplungskörper eines anderen, nach Art eines Verbindungsstücks ausgeführten Kopplungselements in perspektivischer Ansicht,
Figur 15 eine vergrößerte Darstellung des Kopplungselements aus Figur 14 mit erstem und zweitem Kopplungskörper,
Figur 16 ein Kopplungselement nach Art eines Reduzierstücks in perspektivischer Ansicht,
Figur 17 das Kopplungselement aus Figur 16 in einer anderen perspektivischen Darstellung,
Figur 18 das Kopplungselement aus den Figuren 16 und 17 in perspektivischer Schnittansicht,
Figur 19 eine vergrößerte Darstellung des Kopplungselements aus Figur 18 mit angebrachten Wandsegmenten,
Figur 20 ein Kopplungselement nach Art eines Sattelstücks in Einzelteildarstellung,
Figur 21 das Kopplungselement aus Figur 20 im zusammengesetzten Zustand,
Figur 22 das Kopplungselement aus Figur 21 in seitlicher Schnittansicht und
Figur 23 eine geschnittene Draufsicht auf das in Figur 21 dargestellte Kopplungselement mit angebrachten Wandsegmenten.

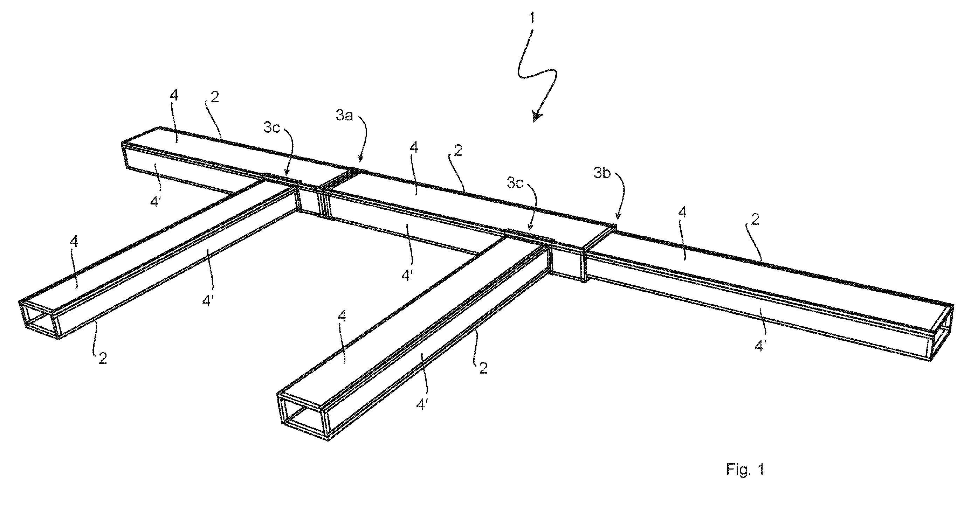

In Figur 1 ist ein erfindungsgemäßes Fluidleitungssystem 1 in perspektivischer Ansicht schematisch dargestellt. Der Ausdruck "Fluid" bezieht sich hierbei sowohl auf ein gasförmiges als auch auf ein dampfförmiges Medium, welches durch das kanalförmige Fluidleitungssystem 1 geleitet werden soll. Das Fluidleitungssystem 1 weist mehrere in Längsrichtung ablängbare Fluidleitungsbauteile 2 und zumindest ein Kopplungselement 3a, 3b, 3c auf, wobei wenigstens zwei Fluidleitungsbauteile 2 mit Hilfe eines Kopplungselements 3a, 3b, 3c fluiddicht und lösbar miteinander verbunden sind. Zur Verbindung von Fluidleitungsbauteilen 2 mit gleichem Strömungsquerschnitt ist das nach Art eines Verbindungsstücks ausgestaltete Kopplungselement 3a vorgesehen, wohingegen zur Reduzierung bzw. Erweiterung des Strömungsquerschnitts das nach Art eines Reduzierstücks ausgebildete Kopplungselement 3b verwendet wird. Neben einer Verbindung von Fluidleitungsbauteilen 2 an deren Stirnenden, wie es die Kopplungselemente 3a und 3b ermöglichen, ist auch eine Verbindung eines Stirnendes eines Fluidleitungsbauteils 2 mit einem Wandsegment 4 eines anderen Fluidleitungsbauteils 2 mit Hilfe des nach Art eines Sattelstücks ausgestalteten Kopplungselements 3c möglich.

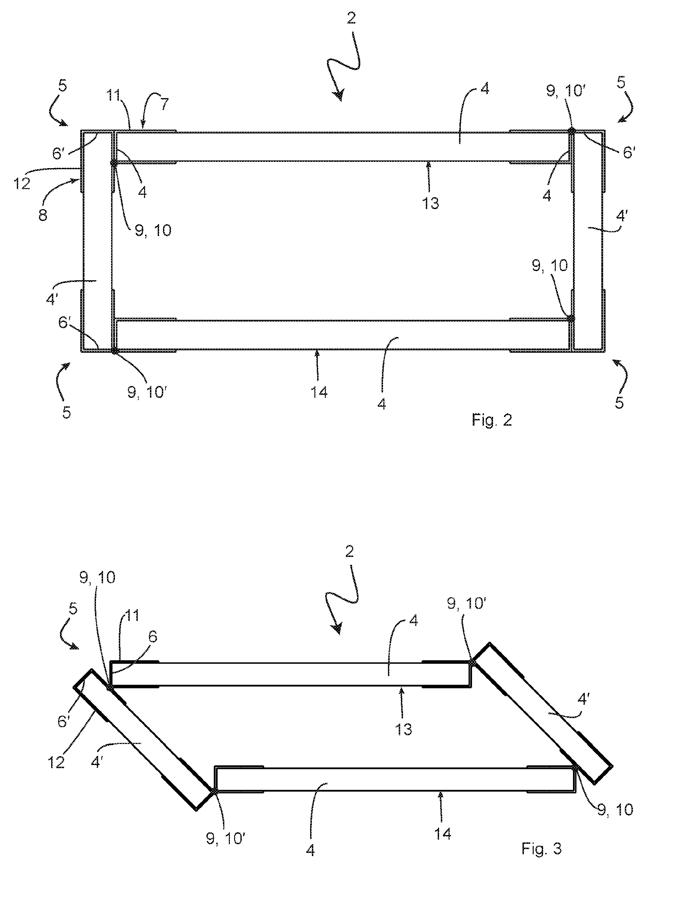

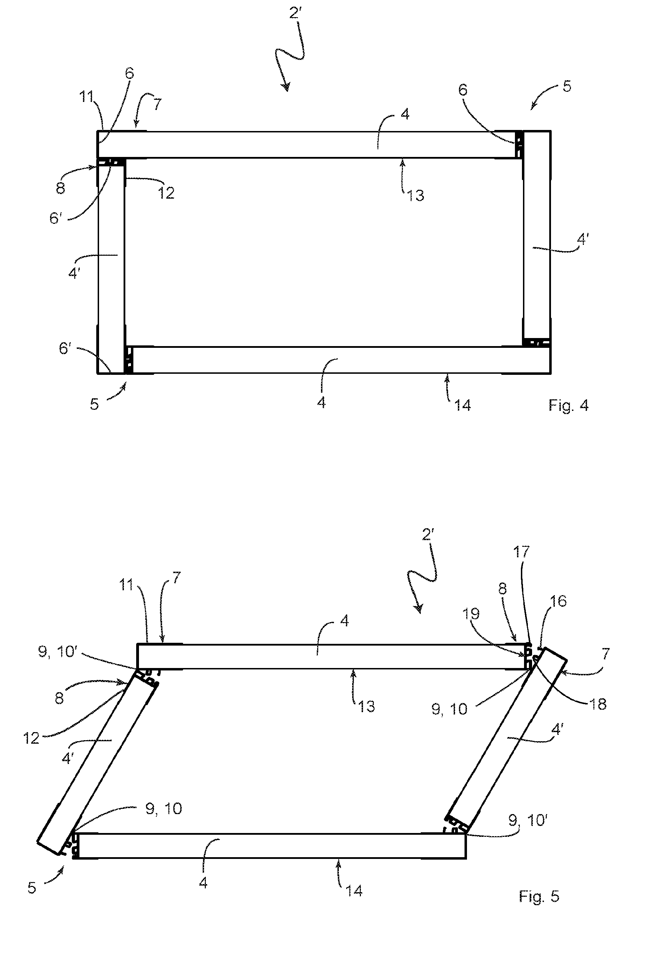

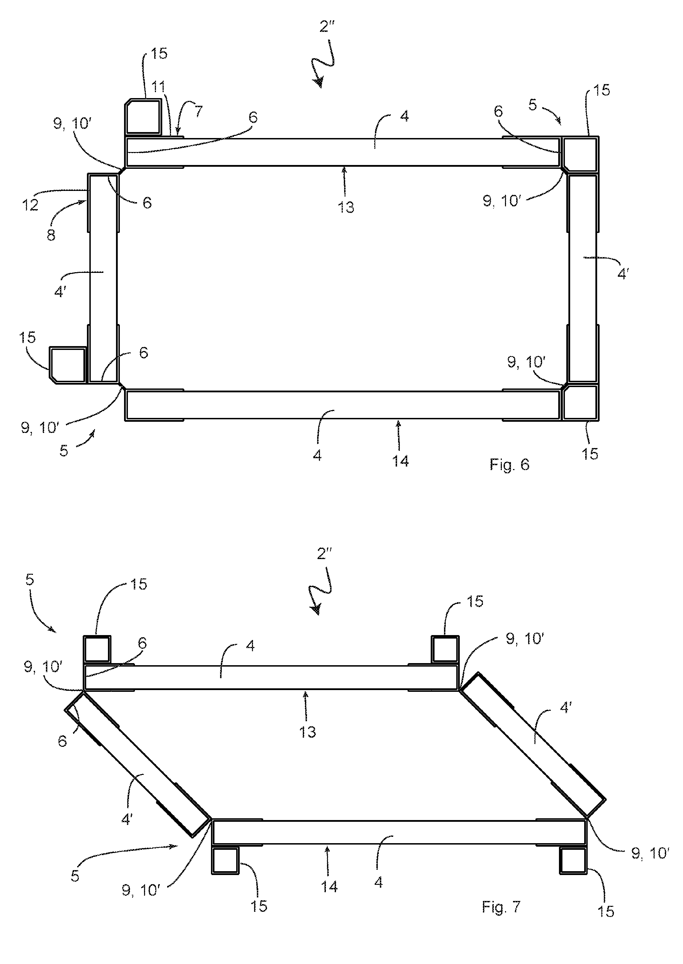

Nachstehend werden zunächst alternative Ausführungsformen des konstruktiven Aufbaus des Fluidleitungsbauteils 2 detailliert beschrieben. In den Figuren 2 und 3 ist eine erste Ausführungsform des Fluidleitungsbauteils 2, in den Figuren 4 und 5 eine zweite Ausführungsform eines Fluidleitungsbauteils 2' und in den Figuren 6 und 7 eine dritte Ausführungsform eines Fluidleitungsbauteils 2" dargestellt. Das Fluidleitungsbauteil 2, 2', 2" weist bei allen drei Ausführungsformen einen modularen Aufbau auf und umfasst insgesamt vier Wandsegmente 4 und 4', die in Gebrauchsposition (siehe Figuren 2, 4 und 6) einen mehreckigen bzw. polygonalen Querschnitt des Fluidleitungsbauteils 2 bilden und die plattenförmig und formstabil ausgebildet sind. Dabei verlaufen bei den Ausführungsformen in der Gebrauchsposition jeweils zwei der vier Wandsegmente 4 parallel zueinander, wobei die zwei Wandsegmente 4 waagerecht und die zwei Wandsegmente 4' senkrecht und quer zu den Wandsegmenten 4 verlaufen. Die zwei Wandsegmente 4 bilden dabei eine Boden- bzw. Deckenwand, wohingegen die zwei Wandsegmente 4' die Seitenwände des modularen

Fluidleitungsbauteils 2, 2', 2" definieren. In
Gebrauchsposition weist das Fluidleitungsbauteil 2, 2', 2" einen rechteckförmigen Querschnitt auf, der von den vier Wandsegmenten 4 und 4' gebildet wird. Die Wandsegmente 4 und 4' sind über jeweilige Eckenelemente 5 miteinander verbunden, die im Bereich der Längsenden bzw. Längskanten 6 bzw. 6' der Wandsegmente 4 und 4' und in den Eckenpunkten des Fluidleitungsbauteils 2, 2', 2" angeordnet sind und die sich im Wesentlichen in Längsrichtung des Fluidleitungsbauteils 2, 2', 2" erstrecken. Ein jeweiliges Eckenelement 5 weist einen ersten Schenkel 7 und einen zweiten Schenkel 8 auf (siehe Figuren 2 bis 7), wobei der erste Schenkel 7 im Bereich eines entsprechenden Längsendes bzw. Längskante 6 eines jeweiligen waagerecht verlaufenden Wandsegments 4 an diesem angebracht ist, wohingegen der zweite Schenkel 8 im Bereich eines entsprechenden Längsendes 6' eines benachbarten bzw. angrenzenden und senkrecht verlaufenden Wandsegments 4' an diesem angebracht ist. Ein scharnierartig ausgebildetes Gelenkelement 9, dass beispielsweise formstabil ausgebildet und/oder ein Filmscharnier sein kann, verbindet den ersten Schenkel 7 schwenkbeweglich mit dem zweiten Schenkel 8, so dass das waagerecht verlaufende Wandsegment 4 und das benachbarte, senkrecht verlaufende Wandsegment 4' mit Bezug auf Klapp- bzw. Schwenkachsen 10 und 10' klappbar bzw. verschwenkbar zueinander sind. Der erste und der zweite Schenkel 7 und 8 sind jeweils als im Querschnitt U-förmiges Profilteil 11 und 12 ausgebildet. Die U-förmigen Profilteile 11 und 12 ummanteln die Wandsegmente 4, 4' im Bereich ihrer entsprechenden Längsenden bzw. Längskanten 6 bzw.

6' nach Art eines Schnittkantenschutzes. Aus Gründen der Übersichtlichkeit sind in Figur 2 bis 7 die Bezugszeichen für die Längsenden bzw. Längskanten 6 und 6', die Schenkel 7 und 8, die Klappachsen 10 und 10' sowie die Profilteile 11 und 12 nicht an allen Wandsegmenten 4 und 4' und deren Verbindungsstellen eingezeichnet.

Wie den Figuren 2 bis 7, welche die drei Ausführungsformen der Fluidleitungsbauteile 2, 2', 2" zeigen, ferner zu entnehmen ist, sind die in den Ecken des Fluidleitungsbauteils 2 angeordneten jeweiligen Schwenk- bzw. Klappachsen 10 und 10' des Gelenkelements 9 unterschiedlich positioniert. Die Schwenk- bzw. Klappachsen 10 sind im Bereich der Innenseitenflächen 13 der Wandsegmente 4, 4' positioniert bzw. angeordnet, wohingegen die Schwenk- bzw. Klappachsen 10' im Bereich der Außenseitenflächen 14 der Wandsegmente 4, 4' positioniert bzw. angeordnet sind.

Bei der ersten und zweiten Ausführungsform des Fluidleitungsbauteils 2 und 2' sind die Schwenk- bzw. Klappachsen 10 und 10' des scharnierartig ausgebildeten Gelenkelements 9 entlang des Umfangs des Fluidleitungsbauteils 2, 2' abwechselnd an der Innenseitenfläche 13 und an der Außenseitenfläche 14 angeordnet (siehe Figuren 2 und 4), damit das Fluidleitungsbauteil 2, 2' zusammenlegbar ist, wie nachstehend noch mit Bezug auf Figuren 3 und 5 erläutert wird. Wie aus Figur 2 ersichtlich ist, liegen in Gebrauchsposition des Fluidleitungsbauteils 2 wenigstens ein jeweiliges Längsende bzw. eine jeweilige Längskante 6 von den zwei parallel zueinander verlaufenden Wandsegmenten 4 an einer jeweiligen Innenseitenfläche 13 der zwei anderen parallel zueinander verlaufenden Wandsegmente 4' an. Insbesondere liegen beide Längsenden bzw. Längskanten 6 der zwei waagerecht und parallel zueinander verlaufenden Wandsegmente 4 an den Innenseitenflächen 13 der benachbarten Wandsegmente 4' an. Demgegenüber liegt bei dem Fluidleitungsbauteil 2' gemäß der zweiten Ausführungsform in Gebrauchsposition von jedem Wandsegment 4, 4' ein Längsende 6 vollständig an einer Innenseitenfläche 13 eines benachbarten Wandsegments 6, 6' an. Aufgrund dieser Anordnungen bei der ersten und zweiten Ausführungsform weisen die Eckenbereiche des errichteten und in Gebrauchsposition angeordneten Fluidleitungsbauteils 2 bzw. 2' keine Reduzierung der Wandstärke auf, so dass die Gefahr einer Kältebrücke bei dieser ersten Ausführungsform des Fluidleitungsbauteils 2 bzw. 2' in den Eckenbereichen nicht gegeben ist. Demgegenüber liegen bei der dritten Ausführungsform des Fluidleitungsbauteils 2" in Gebrauchsposition die Wandsegmente 4 und 4' mit ihren Innenseitenflächen 13 an ihren Längsenden bzw. innenliegenden Längskanten 6 aneinander an, d.h. die Stirnflächen eines jeweiligen Wandsegments 4 und 4' liegen zur Außenseite hin frei, wodurch die Gefahr einer Kältebrücke gegeben ist. Um dies zu verhindern, umfasst ein jeweiliges Eckenelement 5 bei der dritten Ausführungsform des Fluidleitungsbauteils 2" ferner ein sich zumindest abschnittsweise in Längsrichtung des Fluidleitungsbauteils 2" erstreckendes und stabförmig ausgebildetes Arretierungselement 15, welches in Transportposition des Fluidleitungsbauteils 2" auf der Außenseitenfläche 14 eines entsprechenden Wandsegments 4, 4' bzw. des ersten Schenkels 7 bzw. des Profilteils 11 über ein nicht näher dargestelltes Scharnier, beispielsweise ein Filmscharnier, schwenkbar angeordnet ist und welches in Gebrauchsposition (siehe Figur 6) des Fluidleitungsbauteils 2" zwischen den Längsenden 6 von benachbarten Wandsegmenten 4, 4' angeordnet ist und die Wandsegmente 4, 4' keilartig in Position hält. Die Arretierungselemente 15 definieren somit eine Art Anschlag und halten die Wandsegmente 4, 4' in Gebrauchsposition. Die stab- bzw. stangenförmig ausgebildeten Arretierungselemente 15 können aus einem wärmeisolierenden Material gebildet sein. Alternativ dazu können die Arretierungselemente 15 hohlförmig bzw. mit einem jeweiligen Hohlraum ausgebildet sein, wobei der Hohlraum der Arretierungselements 15 mit einem wärmeisolierenden Material ausgefüllt sein kann.

In den Figuren 3, 5 und 7 sind die Wandsegmente 4 und 4' des Fluidleitungsbauteils 2, 2' und 2 " gemäß der drei Ausführungsformen verschwenkt und in einer Zwischenstellung zwischen der Gebrauchsposition und der Transportposition angeordnet. Die zuvor in einem Winkel von 90° zueinander verlaufenden Wandsegmente 4 und 4' sind somit nun zueinander verschwenkt. Dabei sind bei der ersten und zweiten Ausführungsform des Fluidleitungsbauteils 2 und 2' jeweils zwei benachbarte Wandsegmente 4 und 4' im Bereich der Innenseite bzw. der Innenseitenfläche 13 des Fluidleitungsbauteils 2 und 2' schwenkbar verbunden und aufeinander zu klappbar bzw. bewegbar, wohingegen die anderen zwei benachbarten Wandsegmente 4 und 4' im Bereich der Außenseite bzw. der Außenseitenfläche 14 schwenkbar verbunden und voneinander weg klappbar bzw. bewegbar sind. Bei dem Fluidleitungsbauteil 2" gemäß der dritten Ausführungsform sind alle Wandsegmente 4 und 4' im Bereich der Innenseitenfläche 14 angeordnet. Auf diese Weise sind die Wandsegmente 4 und 4' bei allen Ausführungsformen nach Art eines Parallelogramms zwischen der Gebrauchsposition und der Transportposition klappbar, wobei bei der dritten Ausführungsform des Fluidleitungsbauteils 2" zuvor die Arretierungselemente 15 auf die Außenseitenfläche 14 der Wandsegmente 4, 4' geklappt werden müssen.

Bei der ersten Ausführungsform des Fluidleitungsbauteils 2 sind die sich seitlich gegenüberliegenden Schwenk- bzw. Klappachsen 10 und 10' der Eckenelemente 5 nicht auf einer identischen horizontalen Ebene sondern leicht vertikal versetzt angeordnet. In Transportposition sind die beiden Wandsegmente 4 im Wesentlichen aufeinanderliegend und weiterhin waagerecht und parallel zueinander angeordnet. Die zuvor senkrecht ausgerichteten Wandsegmente 4' verlaufen nun auch fast waagerecht, so dass das Fluidleitungsbauteil 2 flach zusammengelegt und für einen platzsparenden Transport geeignet ist.

Bei der zweiten Ausführungsform des Fluidleitungsbauteils 2' sind die sich auf verschiedenen Seiten gegenüberliegenden Eckenelemente 5 auf im Wesentlichen identischen horizontalen Ebenen angeordnet. Ferner verfügen die Eckenelemente 5 über eine Verriegelungsfunktion. Zu diesem Zweck weist der erste Schenkel 7 ein angeformtes Einrastmittel 16 nach Art eines Rasthakens auf, der in Gebrauchsposition des Fluidleitungsbauteils 2' mit einem an dem zweiten Schenkel 8 ausgebildeten Rückhalteelement 17 in Eingriff bringbar ist. Um ein Verkanten des Einrastmittels 16 beim Wechsel zwischen der Gebrauchs- und Transportposition zu verhindern, weist der erste Schenkel 7 zusätzlich einen die Bewegung der Wandsegmente 4 und 4' aus der Transportposition in die Gebrauchsposition führenden Führungssteg 18 auf, der in Gebrauchsposition des Fluidleitungsbauteils 2' in einer an dem zweiten Schenkel 8 ausgebildeten Führungsausnehmung 19 angeordnet ist.

Bei der dritten Ausführungsform des Fluidleitungsbauteils 2" sind die zwei Schenkel 7, 8 der Eckenelemente 5 derart klappbar bzw. schwenkbar, dass die Schenkel 7, 8 in Transportstellung des Fluidleitungsbauteils 2" aufeinander aufliegen.

Es versteht sich, dass die vorstehend für die zweite Ausführungsform des Fluidleitungsbauteils 2' beschriebenen Merkmale des Führungsstegs 18 und der Führungsausnehmung 19 sowie die Merkmale der Verriegelungsfunktion in Form des Einrastmittels 16 und des Rückhalteelements 17 auch bei den Eckenelementen 5 der ersten und dritten Ausführungsform des Fluidleitungsbauteils 2 bzw. 2" entsprechend der vorstehenden Ausführungen ausgebildet sein können, wodurch beispielsweise das Arretierungselement 15 der dritten Ausführungsform zusätzlich in Gebrauchsposition des Fluidleitungsbauteils 2" fixiert werden kann.

Bei den vorstehend beschriebenen Ausführungsformen können die Wandsegmente 4 und 4' zumindest auf ihren Innenseitenflächen 13 mit einer fluidundurchlässigen Kunststoffschicht versehen sein. Auch können die Wandsegmente 4, 4' aus einem verdichteten, wärmeisolierenden sowie feuerbeständigen Fasermaterial, Verbundwerkstoff oder Hartschaum gebildet sein. Das Fasermaterial kann gepresste Mineralwolle, vorzugsweise Glaswolle oder Steinwolle, sein, wobei ein aus einem Fasermaterial gebildetes Leitungsbauteil bis über 100°C temperaturbeständig und demnach im Wesentlichen feuerbeständig ist. Als alternatives Material zu anorganischer Mineralwolle kann auch ein flammhemmend organisches Fasermaterial für die Schicht des Fasermaterials des Fluidleitungsbauteils 2, 2', 2" bzw. der Wandsegmente 4, 4' verwendet werden. Durch die in der Schicht aus gepresstem bzw. verpresstem Fasermaterial gebildeten Hohlräume weist das Fluidleitungsbauteil 2, 2', 2" bzw. weisen die Wandsegmente 4, 4' zudem ein besonders gutes Wärmedämmvermögen. Dadurch kommen die vorteilhaften Eigenschaften dieses Materials für die Anwendung als Fluidleitungskanäle wie beispielsweise zur Gebäudebelüftung und -klimatisierung voll zur Geltung. Die in den Eckenbereichen des Fluidleitungskanals vorgesehenen scharnierartigen Gelenkelemente umfassen neben der Funktionalität der Klappbarkeit von benachbarten Wandsegmenten auch eine Dichtfunktion, so dass keine zusätzlichen Bauteile an dem Fluidleitungskanal vorzusehen sind. Die scharnierartigen Gelenkelemente sorgen zusätzlich zu der quer zur Längsrichtung des Fluidleitungsbauteils 2, 2', 2" vorhandenen Klappbarkeit dafür, dass kein Fluid aus dem Inneren des Fluidleitungsbauteils 2, 2', 2 " nach außen dringt. Die Querschnittsgröße des Fluidleitungsbauteils 2, 2', 2" wird primär durch die Größe der Wandsegmente 4, 4' bestimmt.

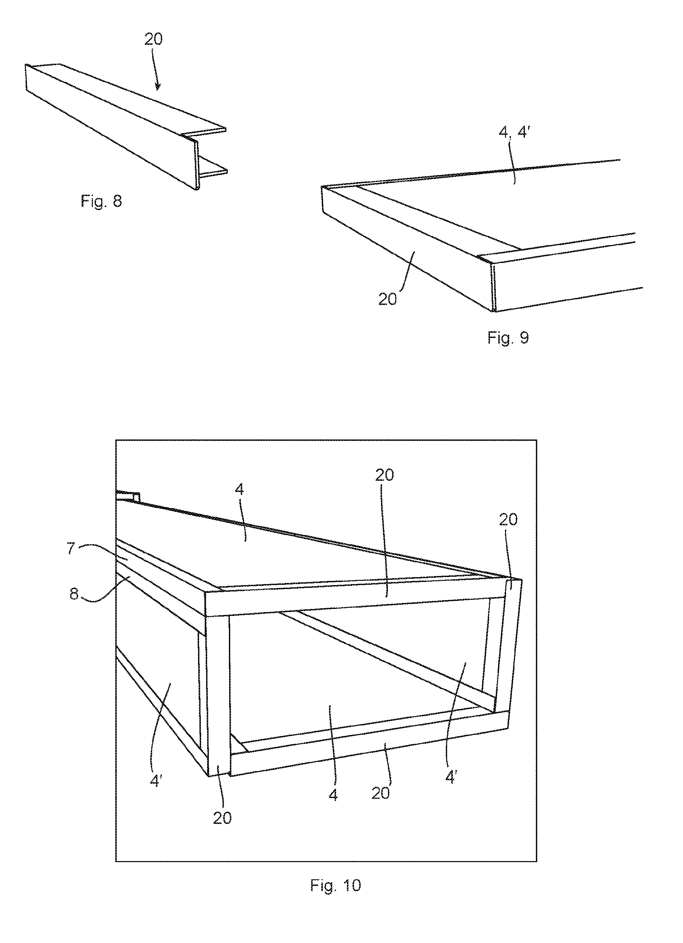

Um beispielsweise die aus einem Fasermaterial gebildeten Wandsegmente 4, 4' an ihren Stirnenden vor Beschädigung zu schützen, können die Wandsegmente 4, 4' optional stirnseitig einen Kantenschutz 20 aufweisen. Insbesondere beim individuellen Ablängen eines Fluidleitungsbauteils 2, 2', 2" wird das Wandmaterial durch die nun vorliegende Schnittkante offengelegt, was unerwünscht ist. Der Kantenschutz 20 dient dazu, das offengelegte Wandmaterial zu verdecken, zu schützen und abzudichten, damit die Schnittkante vor Wasser und Schmutz geschützt ist. In Figur 8 ist eine Ausführungsform eines solchen Kantenschutzes 20 dargestellt, wobei in Figur 9 der Kantenschutz 20 an einem Stirnende eines Wandsegments 4, 4' eines Fluidleitungsbauteils 2, 2', 2 " angebracht ist und das Stirnende umhüllt bzw. ummantelt. In Figur 10 ist schließlich die Verwendung eines Kantenschutzes 20 für jeweils ein Wandsegment 4, 4' eines Fluidleitungsbauteils 2 oder 2' in dessen Gebrauchsposition exemplarisch dargestellt ist, wobei der Kantenschutz auch bei dem Fluidleitungsbauteil 2" gemäß der dritten Ausführungsform verwendbar ist. Der Kantenschutz 20 bzw. Schnittkantenschutz kann entweder werksseitig oder erst am Montageort angebracht sein. Durch den Kantenschutz 20 ist es möglich, das Fluidleitungsbauteil 2, 2', 2" bzw. die Wandsegmente 4, 4' des Fluidleitungsbauteils 2, 2', 2 " entsprechend des Einbauortes abzulängen bzw. in Längsrichtung zu kürzen, wobei dann das bearbeitete Stirnende auf einfache Weise mit Hilfe des Kantenschutzes 20 geschützt werden kann, was beispielsweise dann von Bedeutung ist, wenn das Wandsegment 20 aus einem Fasermaterial besteht. Der Kantenschutz 20 selbst ist nach Art eines U-Profils ausgebildet und kann in klemmender Weise über das Stirnende des entsprechenden Wandsegments 4, 4' geschoben werden. Optional kann der Kantenschutz 20 mittels bekannter Verbindungstechniken zusätzlich an dem Wandsegment 4, 4' befestigt werden, wobei die Klemmkraft zur Anbringung im Normalfall ausreichend ist. Eine Klemmung ist hierbei aber nicht zwingend erforderlich. Beispielsweise kann ein passgenaues Aufstecken des Kantenschutzes 20 ausreichen. Ebenfalls ist eine Kombination der vorbeschriebenen Techniken und zum Beispiel einer Verklebung des Kantenschutzes mit beispielsweise Silikon oder Montagekleber möglich.

Nachstehend werden nun die in Verbindung mit Figur 1 bereits angesprochenen Kopplungselemente 3a, 3b und 3c detailliert beschrieben, die zur Verbindung von wie vorstehend beschriebenen Fluidleitungsbauteilen 2, 2', 2" verwendet werden. Der Einsatz der Kopplungselemente 3a, 3b und 3c ist dabei nicht abhängig von der Ausführungsform der Fluidleitungsbauteile 2, 2', 2"**.** Die Kopplungselemente 3a, 3b, 3c sind lediglich der Querschnittsform der Fluidleitungsbauteile 2, 2', 2" anzupassen, wobei neben der polygonalen Querschnittsform auch davon abweichende Formen, wie beispielsweise ein elliptischer Leitungsquerschnitt, möglich sind.

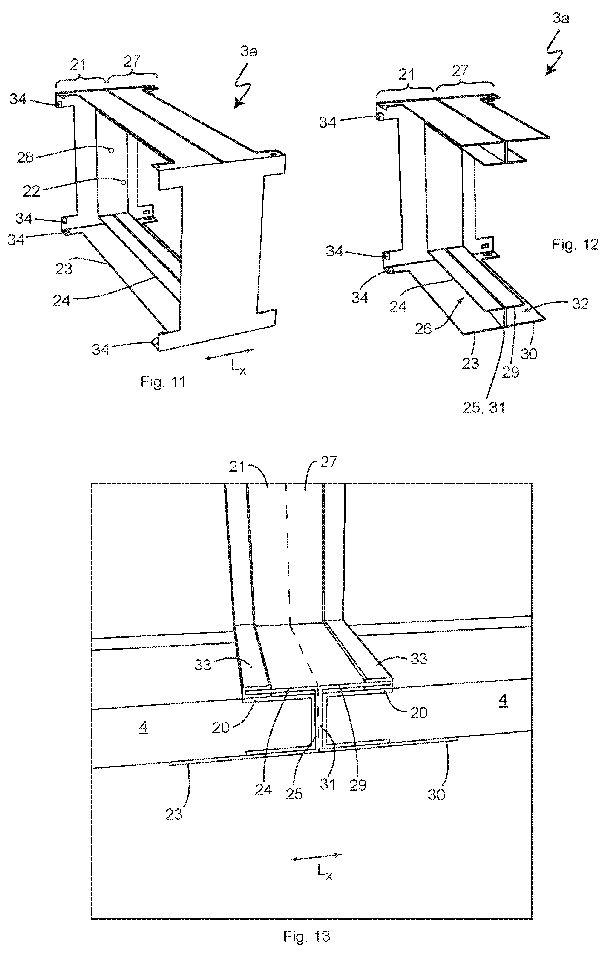

Die Kopplungselemente 3a, 3b und 3c zur fluiddichten Verbindung der ablängbaren, modularen Fluidleitungsbauteile 2, 2', 2" sind in den Figuren 11 bis 23 dargestellt. Als gemeinsame Merkmale weisen die Kopplungselemente 3a, 3b und 3c zumindest einen ersten Kopplungskörper 21 mit einer Durchtrittsöffnung 22 auf. Dabei umfasst der erste Kopplungskörper 21 einen polygonalen Querschnitt, einen sich in Axialrichtung Lₓ erstreckenden Außenumfangssteg 23 und einen die Durchtrittsöffnung 22 begrenzenden sowie sich in Axialrichtung Lₓ parallel zu dem Außenumfangssteg 23 erstreckenden Innenumfangssteg 24, der innenliegend in Bezug auf den Außenumfangssteg 23 angeordnet ist und von diesem umfangsmäßig umgeben ist. Wenigstens ein sich senkrecht zur Axialrichtung Lₓ erstreckender Begrenzungsabschnitt 25 des ersten Kopplungskörpers 21 verbindet hierbei den Außenumfangssteg 23 mit dem Innenumfangssteg 24. Ferner bilden der Innenumfangssteg 24, der Außenumfangssteg 23 und der Begrenzungsabschnitt 25 eine in Axialrichtung Lₓ einseitig offene und um die Durchtrittsöffnung 22 herum verlaufende Umfangsrinne 26 des ersten Kopplungskörpers 21.

Ein jeweiliges Kopplungselement 3a, 3b, 3c, das in den
Figuren 11 bis 23 dargestellt ist, umfasst darüber hinaus einen zweiten Kopplungskörper 27, der fluiddicht mit dem ersten Kopplungskörper 21 verbunden ist oder der einstückig mit dem ersten Kopplungskörper 21 ausgebildet ist. Der zweite Kopplungskörper 27 weist einen polygonalen Querschnitt, eine Durchgangsöffnung 28, die von einem sich vom zweiten Kopplungskörper 27 aus in Axialrichtung Lₓ erstreckenden Innenumfangsansatz 29 begrenzt ist, und einen sich von dem zweiten Kopplungskörper 27 aus in Axialrichtung Lₓ erstreckenden und den Innenumfangsansatz 29 umfangsmäßig umgebenden Außenumfangsansatz 30 auf. Der Außenumfangsansatz 30 und der Innenumfangsansatz 29 sind über eine Begrenzungswandung 31 des zweiten Kopplungskörpers 27 verbunden.

Ein zusätzliches gemeinsames Merkmal der Kopplungselemente 3a und 3b richtet sich darauf, dass der Innenumfangsansatz 29, der Außenumfangsansatz 30 und die Begrenzungswandung 31 des zweiten Kopplungskörpers 27 einen in Axialrichtung Lₓ einseitig offenen und um die Durchgangsöffnung 28 herum verlaufenden Umfangskanal 32 bilden, der in entgegengesetzter Axialrichtung Lₓ in Bezug auf die Umfangsrinne 26 des ersten Kopplungskörpers 21 einseitig offen ist.

Nachstehend werden nun die Merkmale detailliert beschrieben, die für jedes einzelne Kopplungselement 3a, 3b bzw. 3c charakteristisch und nur bei diesem Kopplungselement vorhanden sind.

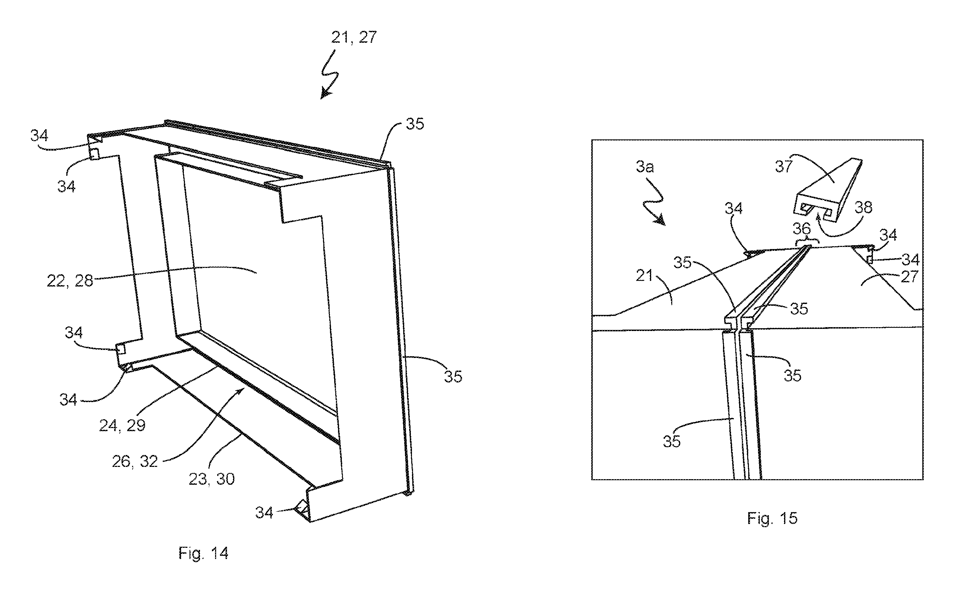

Die Figuren 11 bis 13 zeigen eine erste Ausführungsform des Kopplungselementes 3a, wohingegen die Figuren 14 und 15 eine zweite Ausführungsform des Kopplungselements 3a darstellen. Die beiden Ausführungsformen des Kopplungselements 3a unterscheiden sich im Wesentlichen dadurch, dass das in den Figuren 14 und 15 gezeigte Kopplungselement 3a nicht wie in den Figuren 11 bis 13 einstückig bzw. einteilig ausgeführt ist, sondern dass der erste Kopplungskörper 21 und der zweite Kopplungskörper 27 als separate Bauteile ausgebildet sind, worauf nachstehend noch eingegangen wird.

Der Kopplungskörper 3a der Figuren 11 bis 15 dient dazu, Fluidleitungsbauteile 2, 2', 2" mit identischem Strömungsquerschnitt bzw. deren Wandsegmente 4, 4' fluiddicht und lösbar miteinander zu verbinden, wie es in Figur 13 schematisch in einer vergrößerten Darstellung für eine Schnittansicht gezeigt ist. Aufgrund des identisch zu verbindenden Strömungsquerschnitts sind der erste Kopplungskörper 21 und der zweite Kopplungskörper 22 identisch dimensioniert ausgebildet, so dass auch die Durchtrittsöffnung 22 des ersten Kopplungskörpers 21 und die Durchgangsöffnung 28 des zweiten Kopplungskörpers 27 einen identischen Querschnitt aufweisen. Dabei ist der Innenumfangssteg 24 zu dem Innenumfangsansatz 29 und der Außenumfangssteg 23 zu dem Außenumfangsansatz 30 im Wesentlichen fluchtend angeordnet und ausgebildet. Bei mehrteiliger Ausbildung des Kopplungselements 3a (Figuren 14 und 15) liegen der Begrenzungsabschnitt 25 und die Begrenzungswandung 31 aneinander an, wohingegen bei einstückiger Ausführung des Kopplungselements 3a (Figuren 11 bis 13) der Begrenzungsabschnitt 25 und die Begrenzungswandung 31 einstückig als ein Wandungsabschnitt ausgebildet sind.

Wie insbesondere der Figur 13 zu entnehmen ist, dienen die Umfangsrinne 26 des ersten Kopplungskörpers 21 und der Umfangskanal 32 des zweiten Kopplungskörpers 27 als Einschub- bzw. Einstecköffnungen für die Wandsegmente 4, 4' von zwei zu verbindenden Fluidleitungsbauteilen 2, 2', 2". Zur Verbindung von Fluidleitungsbauteilen 2, 2', 2" werden diese mit ihrem entsprechenden, im Querschnitt viereckigen Stirnende in die Umfangsrinne 26 bzw. in den Umfangskanal 32 eingeschoben. Dabei ist es nicht zwingend erforderlich, dass die Wandsegmente 4, 4' stirnseitig einen Kantenschutz 20 aufweisen. Insbesondere ist der Kantenschutz 20 dann entbehrlich, wenn das Stirnende der Wandsegmente 4, 4' in klemmender und/oder geklebter Weise nach Art eines Formschlusses und/oder Kraftschlusses derart in die Umfangsrinne 26 bzw. in den Umfangskanal 32 einbringbar ist, dass die Fluidleitungsbauteile 2, 2', 2" sicher und stabil vom Kopplungselement 3a gehalten werden. Allerdings erhöht der Kantenschutz 20 die Klemmwirkung eines in die Umfangsrinne 26 bzw. in den Umfangskanal 32 eingesteckten bzw. eingeschobenen Wandsegments 4, 4'. Um die Dichtigkeit der Verbindungsstelle zu erhöhen, ist ferner ein Dichtungselement 33 (siehe Figur 13) vorgesehen, das elastisch ausgebildet ist. Das Dichtungselement 33 weist eine Einkerbung auf und besitzt dadurch eine im Querschnitt im Wesentlichen U-förmige Gestalt. Dadurch ist es möglich, dass jeweils ein Dichtungselement 33 über das freie Ende des Innenumfangsstegs 24 und über das freie Ende des Innenumfangsansatzes 29 zur Abdichtung der Verbindungsstelle geschoben werden kann. Des Weiteren kann wenigstens ein Dichtungselement an mindestens einer sich dafür eignenden Position in jeder erdenklichen Geometrie und Materialkomposition angebracht werden. Die Verwendung eines Kantenschutzes 20 an den Stirnenden der Wandsegmente 4, 4' erhöht die Komprimierung des Dichtungselementes 33 und verbessert die Dichtigkeit der Verbindungsstelle.

Neben einer formschlüssigen Verbindung zwischen dem Kopplungselement 3a und den fluiddicht zu verbindenden Fluidleitungsbauteilen 2, 2', 2 " kann das Kopplungselement 3a Mittel aufweisen, die zusätzlich oder alternativ zum Formschluss eine kraftschlüssige Verbindung zwischen dem Kopplungselement 3a und den Fluidleitungsbauteilen 2, 2', 2" ermöglicht. Zu diesem Zweck weist das Kopplungselement 3a in den Eckenbereichen des Außenumfangsstegs 23 und des Außenumfangsansatzes 30 in Form von Rastnasen ausgebildete Rastmittel 34 auf, die mit an dem Fluidleitungsbauteilen 2, 2', 2 " ausgebildeten
Rastaufnahmemitteln zur kraftschlüssigen Verbindung in Eingriff bringbar sind. Hierfür können alle denkbaren
Verbindungsmöglichkeiten zum Einsatz kommen, wie zum Beispiel Verschraubungen oder Spannsysteme.

In der in den Figuren 11 bis 13 dargestellten Ausführungsform des Kopplungselements 3a ist der erste Kopplungskörper 21 einstückig mit dem zweiten Kopplungskörper 27 ausgebildet. Demgegenüber ist bei der in den Figuren 14 und 15 dargestellten Ausführungsform des Kopplungselements 3a der zweite Kopplungskörper 27 fluiddicht mit dem ersten Kopplungskörper 21 verbunden. In Figur 14 ist einer der beiden Kopplungskörper 21, 27 dargestellt, wobei beide vorzugsweise identisch ausgebildet sind, so dass die Ausführungsform in Figur 14 für beide Kopplungskörper 21, 27 Gültigkeit besitzt. Zur fluiddichten Verbindung der beiden Kopplungskörper 21, 27 zu einem Kopplungselement 3a weisen diese jeweils einen umlaufenden und nach außen abstehenden Umfangssteg bzw. Umfangsansatz 35 auf, der eine flanschartige Verbindung der Kopplungskörper 21, 27 ermöglicht. Der Umfangsansatz 35 ist L-förmig ausgebildet, wobei das jeweilige freie Ende des Umfangsstegs 35 in Richtung der offenen Umfangsrinne 26 bzw. des offenen Umfangskanals 32 weist. Zur Herstellung einer fluiddichten Verbindung von Fluidleitungsbauteilen 2, 2', 2 " wird zunächst ein Fluidleitungsbauteil 2, 2', 2" mit seinem Stirnende in die Umfangsrinne 26 bzw. den Umfangskanal 32 von einem Kopplungskörper 21, 27 eingeschoben. Dieser Vorgang wird mit dem anderen Kopplungskörper 21, 27 an einem zu verbindenden Fluidleitungsbauteil 2, 2', 2" wiederholt, so dass zwei Fluidleitungsbauteile 2, 2', 2" vorliegen, an deren Stirnenden jeweils ein Kopplungskörper 21, 27 in klemmender Weise kraftschlüssig und/oder mit Hilfe der Rastmittel formschlüssig angebracht ist, wobei beispielsweise Verschraubungen oder Spannsysteme zum Einsatz kommen können. Erst dann werden die beiden Kopplungskörper 21, 27 zu einem Kopplungselement 3a miteinander verbunden. Die Verbindung erfolgt in dem in Figur 15 dargestellten Ausführungsbeispiel dadurch, dass die Umfangsstege 35 aneinander anliegend angeordnet werden. In dieser Position bilden die beiden Umfangsstege 35 der beiden Kopplungskörper 21, 27 einen T-förmigen Verbindungsflansch 36. Die Umfangsstege 35 können dann beispielsweise mittels einer Schraubverbindung flanschartig aneinander fixiert werden. Denkbar ist auch eine formschlüssige Verbindung, wie sie in Figur 15 dargestellt ist. Für diese Verbindungsart sind stabförmige Profilelemente 37 vorgesehen, deren Längserstreckung im Wesentlichen der Breite eines Wandsegments 4, 4' entspricht. Das stabförmige Profilelement 37 weist eine T-förmige Einkerbung 38 auf, die im Wesentlichen komplementär zu dem Querschnitt des T-förmigen Verbindungsflansches 36 ausgeformt ist. Zur formschlüssigen Verbindung der beiden Kopplungskörper 21, 27 wird jeweils auf einer Umfangsseite des Kopplungselements 3a ein Profilelement 37 seitlich über den T-förmigen, auf jeder Umfangsseite des Kopplungselements 3a ausgebildeten Verbindungsflansch 36 geschoben, wodurch das Profilelement 37 die freien Enden des T-förmigen Verbindungsflansches 36 bzw. der Umfangsstege 35 hintergreift und dadurch die Kopplungskörper 21, 27 miteinander verbindet. Um die Dichtigkeit dieser Verbindung zu erhöhen, kann zwischen den Kopplungskörpern 21, 27 ein ringförmiges Dichtungselement vorgesehen sein, welches bei Herstellung der formschlüssigen Verbindung der Kopplungskörper 21, 27 komprimiert wird. Des Weiteren kann wenigstens ein Dichtungselement an mindestens einer sich dafür eignenden Position in jeder erdenklichen Geometrie und Materialkomposition angebracht werden.

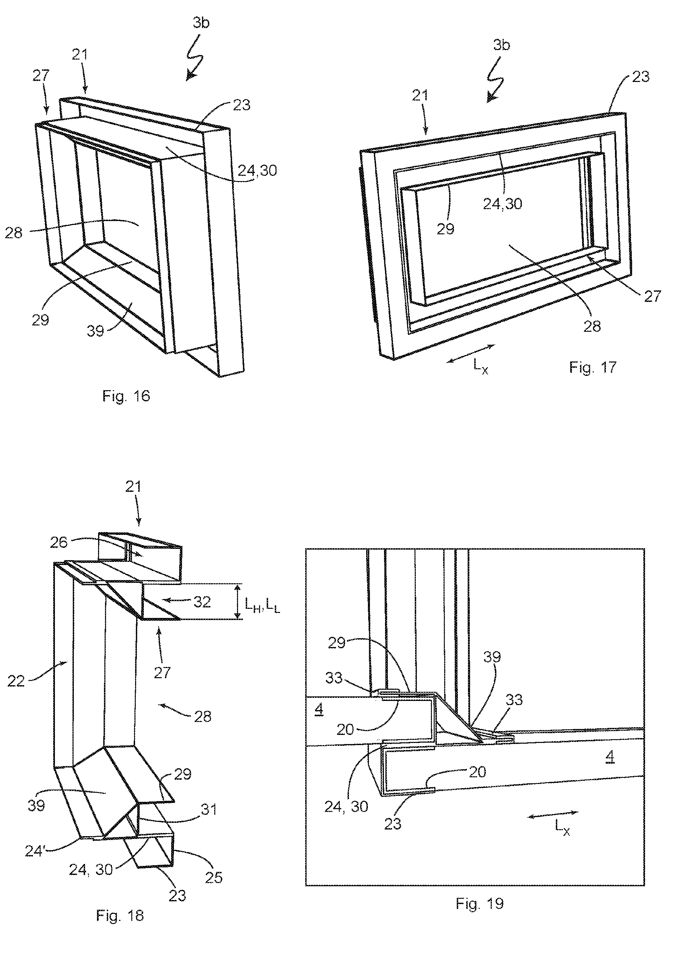

In den Figuren 16 bis 19 ist ein Kopplungselement 3b zur Reduzierung bzw. Erweiterung des Strömungsquerschnitts des Fluidleitungssystems 1 nach Art eines Reduzierstücks dargestellt. Insbesondere ist es Aufgabe des Kopplungselements 3b, zwei Fluidleitungsbauteile 2, 2', 2 " mit unterschiedlich genormten Nennweiten zu verbinden. Durch das Kopplungselement 3b nach Art eines Reduzierstücks werden die durchströmten Flächen dem Volumenstromverbrauch angepasst, wodurch auch Einfluss auf den Druckverlust und die Strömungsgeschwindigkeit des Fluids genommen wird. Bei dem Kopplungselement 3b ist der erste Kopplungskörper 21 im Querschnitt größer dimensioniert ist als der zweite Kopplungskörper 27. Dadurch sind der Innenumfangssteg 24 des ersten Kopplungskörpers 21 und der Außenumfangsansatz 30 des zweiten Kopplungskörpers 27 in Axialrichtung Lₓ überdeckend und senkrecht zur Axialrichtung Lₓ übereinander liegend angeordnet, wie insbesondere der Schnittdarstellung in Figur 18 zu entnehmen ist. Dementsprechend ist die Durchtrittsöffnung 22 des ersten Kopplungskörpers 21 größer dimensioniert als die Durchgangsöffnung 28 des zweiten Kopplungskörpers 22. Um einen kontinuierlichen Verbindungsübergang und geringe Strömungsverluste über das Kopplungselement 3b hinweg zu gewährleisten, ist ein einen kontinuierlichen Strömungsübergang zwischen der Durchtrittsöffnung 22 des ersten Kopplungskörpers 21 und der Durchgangsöffnung 28 des zweiten Kopplungskörpers 27 ermöglichendes Schenkelelement 39 vorgesehen, das sich zwischen dem Innenumfangssteg 24 des ersten Kopplungskörpers 21 und dem Innenumfangsansatz 29 des zweiten Kopplungskörpers 27 erstreckt und eine Höhe L_{H} aufweist, die im Wesentlichen der Länge L_{L} der Begrenzungswandung 31 des zweiten Kopplungskörpers 27 entspricht. Bei dem rahmenartig ausgebildeten Kopplungselement 3b überdecken sich Umfangsrinne 26 und Umfangskanal 32, wobei auch eine in Axialrichtung Lₓ versetzte Anordnung denkbar ist. Auch bei diesem Kopplungselement 3b werden die Wandsegmente 4, 4' von zu verbindenden Fluidleitungsbauteile 2, 2', 2 " mit ihren entsprechenden Stirnenden in die Umfangsrinne 26 und in den Umfangskanal 32 geschoben bzw. eingesteckt. Zur Erhöhung der Dichtigkeit der Verbindung sind ferner ebenso Dichtungselemente 33 vorgesehen, die hier allerdings über ein freies und verlängertes Ende 24' des Innenumfangsstegs 24 und über das freie Ende des Innenumfangsansatzes 29 geschoben sind. Die Wandsegmente 4, 4' können optional stirnseitig einen Kantenschutz 20 aufweisen, wodurch der Rand der Wandsegmente 4, 4' geschützt ist und darüber hinaus das Dichtungselement 33 komprimiert wird. Auch kann das Kopplungselement 3b über Rastmittel in Form von Rastnasen verfügen, die mit den Wandsegmenten 4, 4' eines Fluidleitungsbauteils 2, 2', 2 " formschlüssig in Eingriff bringbar sind. Des Weiteren können alle denkbaren Verbindungsmöglichkeiten zum Einsatz kommen, wie zum Beispiel Verschraubungen, Spannsysteme oder dergleichen.

Das Kopplungselement 3b kann einstückig als Spritzgussteil ausgeführt sein, bei welcher beispielsweise der Innenumfangssteg 24 und der Außenumfangsansatz 30 einstückig bzw. als ein Wandungsabschnitt ausgeformt sind. Alternativ kann das Kopplungselement 3b mehrteilig ausgebildet sein und als Bauteile beispielsweise den ersten und zweiten Kopplungskörper 21, 27 und das Schenkelelement 39 umfassen, wobei die Bauteile über bekannte Verbindungsmittel miteinander zu verbinden sind.

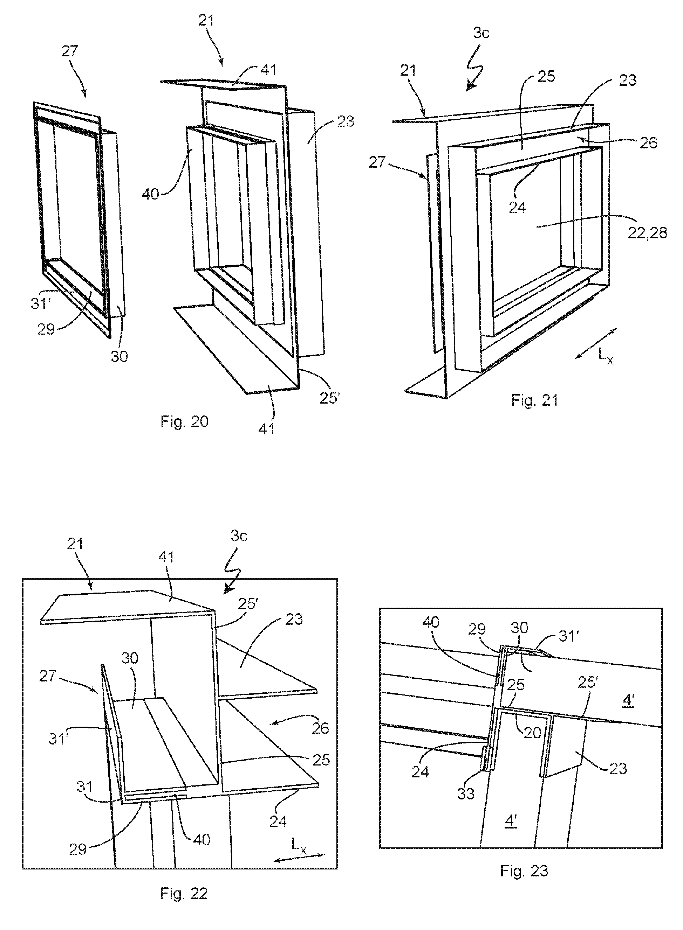

In den Figuren 20 bis 23 ist ein Kopplungselement 3c dargestellt, welches nach Art eines Sattelstückes ausgebildet ist und zwei zueinander quer verlaufende Fluidleitungsbauteile 2, 2', 2" (siehe Figur 1) miteinander verbindet. Zur Herstellung der fluiddichten Verbindung wird das Kopplungselement 3c in eine Öffnung passgenau eingebaut bzw. eingesetzt, die in einem Wandsegment 4, 4' eines ersten Fluidleitungsbauteils 2, 2', 2 " ausgebildet ist. Das Kopplungselement 3c ist dann mit einem senkrecht bzw. quer zu dem ersten Fluidleitungsbauteil 2, 2', 2 " verlaufenden zweiten Fluidleitungsbauteil 2, 2', 2" lösbar verbindbar. Das nach Art eines Sattelstücks ausgebildete Kopplungselement 3c umfasst den Kopplungskörper 21 und den zweiten Kopplungskörper 27, die in klemmender Weise miteinander verbindbar sind. Ebenfalls können anstelle der Klemmfunktion alle denkbaren Verbindungsmöglichkeiten eingesetzt werden, wie zum Beispiel Verschraubungen, Spannsysteme oder dergleichen. Zu diesem Zweck weist der Begrenzungsabschnitt 25 des ersten Kopplungskörpers 21 einen Klemmsteg 40 auf, der sich von der der Umfangsrinne 26 gegenüberliegenden Seite des Begrenzungsabschnitts 25 aus in Axialrichtung Lₓ erstreckt. Zur lösbaren Verbindung der beiden Klemmkörper 21, 27 ist der Klemmsteg 40 des ersten Kopplungskörpers 21 zwischen dem Innenumfangsansatz 29 und dem Außenumfangsansatz 30 des zweiten Kopplungskörpers 27 in klemmender Weise einbringbar, so dass die beiden Klemmkörper 21, 27 in kraftschlüssiger Weise verbunden sind. In den Figuren 21 und 22 ist das zusammengesetzte Kopplungselement 3c dargestellt, wobei Figur 22 eine perspektivische Schnittansicht zeigt, aus der die klemmende und kraftschlüssige Verbindung ersichtlich ist, die vorstehend beschrieben wurde. Der erste Kopplungskörper 21 weist ferner die Umfangsrinne 26 auf, in die die Stirnenden bzw. die mit dem Kantenschutz 20 versehenen Stirnenden der Wandsegmente 4, 4' einschiebbar bzw. einsteckbar sind. Der Begrenzungsabschnitt 25 erstreckt sich über den Außenumfangssteg 23 mit einem Abschnitt 25' hinaus, wobei sich an den Abschnitt 25' ein Stützansatz 41 anschließt. Beim Einbau des Kopplungselements 3c wird zunächst der zweite Kopplungskörper 27 in das die Öffnung in einem Wandsegmente 4, 4' aufweisende Fluidleitungsbauteil 2, 2', 2" an einem Stirnende ins Innere eingeschoben und dann in die Öffnung eingesetzt. Die Öffnung in dem Wandsegmente 4, 4' ist dem Außenumfangsansatz 30 des zweiten Kopplungskörpers 27 angepasst, so dass der zweite Kopplungskörper 27 mit leichtem Druck in die Öffnung eingepasst werden kann. Nach Einpassung stehen dann der Innenumfangsansatz 29 und der Außenumfangsansatz 30 aus der Öffnung des Fluidleitungsbauteils 2, 2', 2 " hervor. Anschließend wird dann der Klemmsteg 40 des ersten Kopplungskörpers 21 zwischen dem Innenumfangsansatz 29 und dem Außenumfangsansatz 30 des zweiten Kopplungskörpers 27 in klemmender Weise eingebracht, wie aus den
Figuren 22 und 23 ersichtlich ist. Dabei ist am ersten Kopplungskörper 27 an dessen unterem und oberem Ende jeweils ein Stützansatz 41 angeformt, der das quer zum Kopplungselement 3c verlaufende Fluidleitungsbauteil 2, 2', 2 " an dessen Ober- und Unterseite auf dessen Außenseite nach Art eines Winkelelementes abstützt. Das zweite Kopplungselement 27 weist ferner einen Abstützansatz 31' auf, der sich in Verlängerung der Begrenzungswandung 31 erstreckt. Zwischen dem Abstützansatz 31' und dem Abschnitt 25' verläuft im eingebauten Zustand des Kopplungselements 3c ein Wandabschnitt eines Wandsegmentes 4, 4'. Ebenso wie bei den Kopplungselementen 3a und 3b ist auch bei dem Kopplungselement 3c ein elastisches Dichtungselement 33 vorgesehen (siehe Figur 23), das über das freie Ende des Innenumfangsstegs 24 geschoben ist. Des Weiteren kann wenigstens ein Dichtungselement an mindestens einer sich dafür eignenden Position in jeder erdenklichen Geometrie und Materialkomposition angebracht werden. Darüber hinaus kann zumindest der erste Kopplungskörper 21 des Kopplungselementes 3c Rastmittel 34 aufweisen, die mit an dem Fluidleitungsbauteil 2, 2', 2" ausgebildeten Rastaufnahmemitteln in Eingriff bringbar sind. Zur Verbindung von Kopplungskörper 21 und Fluidleitungsbauteil 2, 2', 2" können verschiedenste Verbindungsmöglichkeiten und - techniken dienen, wie zum Beispiel Verschraubungen, Spannsystem oder dergleichen.

Zusammenfassend ist vorstehend ein Fluidleitungssystem 1 mit wenigstens zwei ablängbaren, modularen Fluidleitungsbauteilen 2, 2', 2" und mit zumindest einem die wenigstens zwei Fluidleitungsbauteile 2, 2', 2 " fluiddicht und lösbar miteinander verbindenden Kopplungselement 3a, 3b, 3c beschrieben, wobei das Kopplungselement 3a, 3b, 3c einen ersten Kopplungskörper 21 umfasst, der eine Durchtrittsöffnung 22 aufweist. Ein jeweiliges Fluidleitungsbauteil 2, 2', 2" umfasst mehrere plattenförmig und formstabil ausgebildete Wandsegmente 4, 4', die eben oder gekrümmt geformt sein können, so dass polygonale, ringförmige oder elliptische Fluidleitungsbauteile denkbar sind. Dabei sind benachbarte Wandsegmente 4, 4' über wenigstens ein Eckenelement 5 verbunden. Der erste Kopplungskörper 21 weist einen sich in Axialrichtung Lₓ erstreckenden Außenumfangssteg 23 und einen die Durchtrittsöffnung 22 begrenzenden sowie sich in Axialrichtung Lₓ parallel zu dem Außenumfangssteg 23 erstreckenden Innenumfangssteg 24 auf, der in Bezug auf den Außenumfangssteg 23 innenliegend angeordnet ist und von diesem umfangsmäßig umgeben ist. Wenigstens ein sich senkrecht zur Axialrichtung Lₓ erstreckender Begrenzungsabschnitt 25 des ersten Kopplungskörpers 21 verbindet den Außenumfangssteg 23 mit dem Innenumfangssteg 24. Der Innenumfangssteg 24, der Außenumfangssteg 23 und der Begrenzungsabschnitt 25 bilde eine in Axialrichtung Lₓ einseitig offene und um die
Durchtrittsöffnung 22 herum verlaufende Umfangsrinne 26 des ersten Kopplungskörpers 21, die ein Stirnende eines Fluidleitungsbauteils 2, 2', 2" in klemmender Weise aufnehmen kann. Alternativ zu der Möglichkeit, dass die Umfangsrinne 26 ein Stirnende in klemmender Weise aufnimmt, kann die Umfangsrinne 26 ein Stirnende eines Fluidleitungsbauteils 2, 2', 2" auch beispielsweise mit Hilfe von Verschraubungen oder Spannsystemen aufnehmen. Ferner ist ein zweiter Kopplungskörper 27 vorgesehen, der fluiddicht mit dem ersten Kopplungskörper 21 verbunden ist oder der einstückig mit dem ersten Kopplungskörper 21 ausgebildet ist und zur Verbindung mit einem anderen Fluidleitungsbauteil 2, 2', 2" bestimmt ist. Der zweite Kopplungskörper 27 weist eine Durchgangsöffnung 28, die von einem sich vom zweiten Kopplungskörper 27 aus in Axialrichtung Lₓ erstreckenden Innenumfangsansatz 29 begrenzt ist, und einen sich von dem zweiten Kopplungskörper 27 aus in Axialrichtung Lₓ erstreckenden und den Innenumfangsansatz 29 umfangsmäßig umgebenden Außenumfangsansatz 30 auf, wobei der
Außenumfangsansatz 30 und der Innenumfangsansatz 29 über eine Begrenzungswandung 31 des zweiten Kopplungskörpers 27 miteinander verbunden sind. Dabei ist die Querschnittsform des Kopplungselements 3a, 3b , 3c an den Querschnitt der Fluidleitungsbauteile 2, 2', 2 " angepasst.

Die vorstehend beschriebene Erfindung ist selbstverständlich nicht auf die beschriebenen und dargestellten Ausführungsformen beschränkt. Beispielsweise können die Fluidleitungsbauteile einen von der dargestellten polygonalen Querschnittsform abweichenden Querschnitt, wie beispielsweise einen elliptischen Querschnitt, aufweisen, indem die Wandsegmente in Breitenrichtung gekrümmt ausgebildet sind. Es ist ersichtlich, dass an den in der Zeichnung dargestellten Ausführungsformen zahlreiche, dem Fachmann entsprechend der beabsichtigten Anwendung naheliegende Abänderungen vorgenommen werden können, ohne dass dadurch der Bereich der Erfindung verlassen wird. Dabei gehört zur Erfindung alles dasjenige, was in der Beschreibung enthalten und/oder in der Zeichnung dargestellt ist, einschließlich dessen, was abweichend von den konkreten Ausführungsbeispielen für den Fachmann naheliegt.

## Patentansprüche

1. Kopplungselement (3a, 3b, 3c) zur fluiddichten Verbindung von ablängbaren, modularen Fluidleitungsbauteilen (2, 2', 2"), das zumindest einen ersten Kopplungskörper (21) mit einer Durchtrittsöffnung (22) umfasst,
**dadurch gekennzeichnet, dass**
der erste Kopplungskörper (21) einen sich in Axialrichtung (Lₓ) erstreckenden Außenumfangssteg (23) und einen die Durchtrittsöffnung (22) begrenzenden sowie sich in Axialrichtung (Lₓ) parallel zu dem Außenumfangssteg (23) erstreckenden Innenumfangssteg (24) aufweist, der innenliegend in Bezug auf den Außenumfangssteg (23) angeordnet ist und von diesem umfangsmäßig umgeben ist,
wobei wenigstens ein sich senkrecht zur Axialrichtung (Lₓ) erstreckender Begrenzungsabschnitt (25) des ersten Kopplungskörpers (21) den Außenumfangssteg (23) mit dem Innenumfangssteg (24) verbindet,
wobei der Innenumfangssteg (24), der Außenumfangssteg (23) und der Begrenzungsabschnitt (25) eine in Axialrichtung (Lₓ) einseitig offene und um die Durchtrittsöffnung (22) herum verlaufende Umfangsrinne (26) des ersten Kopplungskörpers (21) bilden,
wobei ein zweiter Kopplungskörper (27) vorgesehen ist, der fluiddicht mit dem ersten Kopplungskörper (21) verbunden ist oder der einstückig mit dem ersten Kopplungskörper (21) ausgebildet ist,
wobei der zweite Kopplungskörper (27) eine Durchgangsöffnung (28), die von einem sich vom zweiten Kopplungskörper (27) aus in Axialrichtung (Lₓ) erstreckenden Innenumfangsansatz (29) begrenzt ist, und einen sich von dem zweiten Kopplungskörper (27) aus in Axialrichtung (Lₓ) erstreckenden und den Innenumfangsansatz (29) umfangsmäßig umgebenden Außenumfangsansatz (30) aufweist, und
wobei der Außenumfangsansatz (30) und der
Innenumfangsansatz (29) über eine Begrenzungswandung (31) des zweiten Kopplungskörpers (21) miteinander verbunden sind.

2. Kopplungselement (3a, 3b, 3c) nach Anspruch 1**, dadurch gekennzeichnet, dass** der Innenumfangsansatz (29), der Außenumfangsansatz (30) und die Begrenzungswandung (31) einen in Axialrichtung (Lₓ) einseitig offenen und um die Durchgangsöffnung (28) herum verlaufenden Umfangskanal (32) bilden, der in entgegengesetzter Axialrichtung (Lₓ) in Bezug auf die Umfangsrinne (26) des ersten Kopplungskörpers (21) einseitig offen ist.

3. Kopplungselement (3a, 3b, 3c) nach Anspruch 1 oder 2,
**dadurch gekennzeichnet, dass** der erste Kopplungskörper (21) im Querschnitt größer dimensioniert ist als der zweite Kopplungskörper (27).

4. Kopplungselement (3a, 3b, 3c) nach Anspruch 3, **dadurch gekennzeichnet, dass** der Innenumfangssteg (24) des ersten Kopplungskörpers (21) und der Außenumfangsansatz (30) des zweiten Kopplungskörpers (27) in Axialrichtung (Lₓ) überdeckend und senkrecht zur Axialrichtung (Lₓ) übereinander liegend angeordnet sind.

5. Kopplungselement (3a, 3b, 3c) nach Anspruch 3 oder 4,
**gekennzeichnet durch** ein einen kontinuierlichen Strömungsübergang zwischen der Durchtrittsöffnung (22) des ersten Kopplungskörpers (21) und der Durchgangsöffnung (28) des zweiten Kopplungskörpers (27) ermöglichendes Schenkelelement (39), das sich zwischen dem Innenumfangssteg (24) des ersten Kopplungskörpers (21) und dem Innenumfangsansatz (29) des zweiten Kopplungskörpers (27) erstreckt und eine Höhe (L_{H}) aufweist, die im Wesentlichen der Länge (L_{L}) der Begrenzungswandung (31) des zweiten Kopplungskörpers (27) entspricht.

6. Kopplungselement (3a, 3b, 3c) nach Anspruch 1**, dadurch gekennzeichnet, dass** der Begrenzungsabschnitt (25) des ersten Kopplungskörpers (21) einen Klemmsteg (40) aufweist, der sich von der der Umfangsrinne (26) gegenüberliegenden Seite des Begrenzungsabschnitts (25) aus in Axialrichtung (Lₓ) erstreckt,
wobei der Klemmsteg (40) des ersten Kopplungskörpers (21) zwischen dem Innenumfangsansatz (29) und dem Außenumfangsansatz (30) des zweiten Kopplungskörpers (27) zur lösbaren Verbindung des ersten Kopplungskörpers (21) mit dem zweiten Kopplungskörper (27) in klemmender, rastender oder verschraubbarer Weise einbringbar ist.

7. Kopplungselement (3a, 3b, 3c) nach einem der vorhergehenden Ansprüche, **dadurch gekennzeichnet, dass** zumindest ein elastisches Dichtungselement (33) vorgesehen ist, das über das freie Ende des Innenumfangsstegs (24) und/oder über das freie Ende des Innenumfangsansatzes (29) geschoben ist.

8. Fluidleitungssystem (1) mit wenigstens zwei ablängbaren, modularen Fluidleitungsbauteilen (2, 2', 2") und mit zumindest einem die wenigstens zwei Fluidleitungsbauteile (2, 2', 2") fluiddicht und lösbar miteinander verbindenden Kopplungselement (3a, 3b, 3c), das einen ersten Kopplungskörper (21) umfasst, der eine Durchtrittsöffnung (22) aufweist,
wobei ein jeweiliges Fluidleitungsbauteil (2, 2', 2 ") mehrere plattenförmig und formstabil ausgebildete Wandsegmente (4, 4') aufweist, wobei benachbarte Wandsegmente (4, 4') über wenigstens ein Eckenelement (5) verbunden sind,
**dadurch gekennzeichnet, dass**
der erste Kopplungskörper (21) einen sich in Axialrichtung (Lₓ) erstreckenden Außenumfangssteg (23) und einen die Durchtrittsöffnung (22) begrenzenden sowie sich in Axialrichtung (Lₓ) parallel zu dem Außenumfangssteg (23) erstreckenden Innenumfangssteg (24) aufweist, der in Bezug auf den Außenumfangssteg (23) innenliegend angeordnet ist und von diesem umfangsmäßig umgeben ist,
wobei wenigstens ein sich senkrecht zur Axialrichtung (Lₓ) erstreckender Begrenzungsabschnitt (25) des ersten Kopplungskörpers (21) den Außenumfangssteg (23) mit dem Innenumfangssteg (24) verbindet,
wobei der Innenumfangssteg (24), der Außenumfangssteg (23) und der Begrenzungsabschnitt (25) eine in Axialrichtung (Lₓ) einseitig offene und um die Durchtrittsöffnung (22) herum verlaufende Umfangsrinne (26) des ersten Kopplungskörpers (21) bilden, die ein Stirnende eines Fluidleitungsbauteils (2, 2', 2") in klemmender, rastender oder verschraubbarer Weise aufnimmt,
wobei ein zweiter Kopplungskörper (27) vorgesehen ist, der fluiddicht mit dem ersten Kopplungskörper (21) verbunden ist oder der einstückig mit dem ersten Kopplungskörper (21) ausgebildet ist und zur Verbindung mit einem anderen Fluidleitungsbauteil (2, 2', 2") bestimmt ist,
wobei der zweite Kopplungskörper (27) eine Durchgangsöffnung (28), die von einem sich vom zweiten Kopplungskörper (27) aus in Axialrichtung (Lₓ) erstreckenden Innenumfangsansatz (29) begrenzt ist, und einen sich von dem zweiten Kopplungskörper (27) aus in Axialrichtung (Lₓ) erstreckenden und den Innenumfangsansatz (29) umfangsmäßig umgebenden Außenumfangsansatz (30) aufweist, und
wobei der Außenumfangsansatz (30) und der
Innenumfangsansatz (29) über eine Begrenzungswandung (31) des zweiten Kopplungskörpers (21) miteinander verbunden sind.

9. Fluidleitungssystem (1) nach Anspruch 8, **dadurch gekennzeichnet, dass** ein jeweiliges Eckenelement (5) sich im Wesentlichen in Längsrichtung des Fluidleitungsbauteils (2, 2', 2") erstreckt und wenigstens ein benachbarte Wandsegmente (4, 4') miteinander verbindendes scharnierartiges Gelenkelement (9) umfasst, durch das die Wandsegmente (4, 4') aus der Gebrauchsposition in eine Transportposition, in welcher die Wandsegmente (4, 4') zusammengeklappt und im Wesentlichen aufeinanderliegend angeordnet sind, schwenkbar sind.

10. Fluidleitungssystem (1) nach Anspruch 8 oder 9,
**dadurch gekennzeichnet, dass** ein jeweiliges Eckenelement (5) zweischenklig ausgebildet ist, wobei ein erster Schenkel (7) im Bereich einer Längskante eines Wandsegments (4, 4') angebracht ist und ein zweiter Schenkel (8) im Bereich einer Längskante eines benachbarten Wandsegments (4, 4') angebracht ist, wobei das scharnierartige Gelenkelement (9) den ersten Schenkel (7) mit dem zweiten Schenkel (8) schwenkbeweglich verbindet.

11. Fluidleitungssystem (1) nach Anspruch 10, **dadurch gekennzeichnet, dass** der erste Schenkel (7) und/oder der zweite Schenkel (8) als Profilteil (11, 12) ausgebildet sind/ist, das das entsprechende Wandsegment (4, 4') im Bereich der entsprechenden Längskante abschnittsweise umfasst und ummantelt.

12. Fluidleitungssystem (1) nach einem der Ansprüche 8 bis 11, **dadurch gekennzeichnet, dass** das Kopplungselement (3a, 3b, 3c) Rastmittel (34) aufweist, die mit an dem Fluidleitungsbauteil (2, 2', 2 ") ausgebildeten Rastaufnahmemitteln in Eingriff bringbar sind.

13. Fluidleitungssystem (1) nach einem der Ansprüche 8 bis 12, **gekennzeichnet durch** ein Kopplungselement (3a, 3b, 3c) nach einem der Ansprüche 2 bis 7.

14. Fluidleitungssystem (1) nach einem der Ansprüche 8 bis 13, **dadurch gekennzeichnet, dass** ein jeweiliges Stirnende eines jeweiligen Wandsegments (4, 4') mit einem das Stirnende umhüllenden Kantenschutz (20) versehen ist, der in klemmender Weise in die Umfangsrinne (26) oder den Umfangskanal (32) des Kopplungselements (3a, 3b, 3c) einbringbar ist.

15. Fluidleitungssystem (1) nach Anspruch 13 oder 14,
**dadurch gekennzeichnet, dass** das Kopplungselement (3c) in einer Öffnung eines Wandsegments (4, 4') eines ersten Fluidleitungsbauteils (2, 2', 2") passgenau eingebaut ist und mit einem senkrecht zu dem ersten Fluidleitungsbauteil (2, 2', 2 ") angeordneten zweiten Fluidleitungsbauteil (2, 2', 2") nach Art eines Sattelstücks verbunden ist.
